# EUROPEAN PATENT APPLICATION

(11) **EP 2 857 267 A1**
(43) Date of publication of application: **08.04.2015**
(21) Application number: 12877156.5
(22) Date of filing: 25.05.2012
(51) Int. Cl.: B60T 8/17, B60T 17/18

(54) **BRAKING DEVICE FOR VEHICLE**

(71) Applicant: Toyota Jidosha Kabushiki Kaisha, Toyota-shi, Aichi 471-8571 (JP)
(72) Inventor: MIYAZAKI Tetsuya, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/063552
(87) International publication number: WO 2013/175638

(57) **Abstract**

A master cylinder (21) generates a master cylinder pressure in response to a stepping operation by a driver on a brake pedal (10). A power hydraulic pressure generation device (30) includes a pressurizing pump (31) and an accumulator (32), and a hydraulic pressure of a working fluid pressurized by the pressurizing pump (31) is accumulated by the accumulator (32) as an accumulator pressure. A pressure increasing mechanism (80) communicates to the master cylinder (21) and the accumulator (32), mechanically moves in response to the master cylinder pressure supplied from the master cylinder (21), and uses the accumulator pressure supplied from the accumulator (32) to generate a servo pressure. A pressure increasing mechanism cut valve (90) serving as a shut-off valve is a normally-closed electromagnetic on-off valve, and is provided on a high pressure supply passage (15) for communication between the accumulator (32) and the pressure increasing mechanism (80). The pressure increasing mechanism cut valve (90) is controlled by a brake ECU (100) to be in a closed state for shutting off the communication between the accumulator (32) and the pressure increasing mechanism (80).

## Description

### Technical Field

The present invention relates to a vehicle brake device configured to selectively use a power hydraulic pressure source and a master cylinder as a hydraulic pressure source, and more particularly, to a vehicle brake device including a pressure increasing mechanism connected to a power hydraulic pressure source and a master cylinder.

### Background Art

In recent years, there has been proposed a brake device including a pressurizing pump (accumulator) serving as a power hydraulic pressure source, and a pressure increasing mechanism configured to use a hydraulic pressure of the pressurizing pump (accumulator) to increase the hydraulic pressure from a master cylinder and output the increased hydraulic pressure. The brake device is configured to selectively use the hydraulic pressure from the pressurizing pump (accumulator) and the hydraulic pressure from the pressure increasing mechanism. For example, as a brake device of this type, hitherto, a hydraulic brake control device according to Patent Literature 1 and a brake system according to Patent Literature 2 have been known. In the related-art brake control device and brake system, in the normal state, a target hydraulic pressure of wheel cylinders is set, which corresponds to the hydraulic pressure generated in the master cylinder by a stepping operation by a driver on a brake pedal, and a linear control valve is driven to control the hydraulic pressure (accumulator pressure) increased by the pressurizing pump to follow the set target hydraulic pressure of the wheel cylinders, thereby supplying the hydraulic pressure. In any abnormal state, the hydraulic pressure increased by the pressure increasing mechanism by using the hydraulic pressure (accumulator pressure) increased by the pressurizing pump is supplied to the wheel cylinders.

### Citation List

### Patent Literature

[PTL 1] JP 10-287227 A
[PTL 2] JP 2011-156999 A

### Summary of Invention

By the way, in the related-art hydraulic brake control device and brake system, the pressure increasing mechanism always directly communicates to the pressurizing pump (accumulator), which is a power hydraulic pressure source, and the master cylinder. Therefore, the related-art hydraulic brake control device and brake system have such a structure that the master cylinder can communicate via the pressure increasing mechanism to the power hydraulic pressure source. As a result, for example, if a leak of the working fluid or the like occurs in the pressure increasing mechanism, the pressurized working fluid from the power hydraulic pressure source may flow backward to the master cylinder side. Moreover, in the related-art hydraulic brake control device and brake system, for example, if a leak of the working fluid or the like occurs in a flow passage between the pressure increasing mechanism and the wheel cylinder, namely, in a brake system as an abnormal state, the hydraulic pressure accumulated in the power hydraulic pressure source may be wasted (consumed) by the leak of the working fluid or the like. As a result, the driver may feel a sense of discomfort in brake operation feeling.

The present invention has been made in view of the above-mentioned problem, and therefore has an object to provide a vehicle brake device for appropriately controlling the connection between the power hydraulic pressure source and the pressure increasing mechanism.

In order to achieve the object, a vehicle brake device according to one embodiment of the present invention includes a master cylinder, a power hydraulic pressure source, and a pressure increasing mechanism.

The master cylinder generates a hydraulic pressure in response to an operation by a driver on a brake pedal. The power hydraulic pressure source is configured to generate a hydraulic pressure by drive of a pressurizing pump, and includes an accumulator to accumulate the generated hydraulic pressure in the accumulator. The pressure increasing mechanism is connected to the master cylinder and the power hydraulic pressure source, is configured to mechanically move by the hydraulic pressure output from the master cylinder in response to the operation by the driver on the brake pedal, and use the hydraulic pressure from the power hydraulic pressure source to generate a hydraulic pressure having a predetermined ratio with respect to the hydraulic pressure by the master cylinder.

One feature of the vehicle brake device according to one embodiment of the present invention resides in that the vehicle brake device includes a shut-off valve that is a normally-open electromagnetic on-off valve provided on a passage for connecting the power hydraulic pressure source and the pressure increasing mechanism to each other, the shut-off valve being configured to be switched from an open state for permitting transmission of the hydraulic pressure from the power hydraulic pressure source to the pressure increasing mechanism to a closed state for inhibiting the transmission of the hydraulic pressure from the power hydraulic pressure source to the pressure increasing mechanism. In this case, the shut-off valve may be switched to the closed state at least in an abnormal state in which there is a possibility of occurrence of a leak of the working fluid in the pressure increasing mechanism. Further, in those cases, the shut-off valve may be switched to the closed state in a normal state in which no leak of the working fluid occurs in the pressure increasing mechanism. Further, in those cases, the hydraulic pressure generated by the pressure increasing mechanism may be transmitted to the master cylinder as a servo pressure.

As a result, the transmission of the hydraulic pressure, specifically, the communication of the working fluid from the power hydraulic pressure source to the pressure increasing mechanism is surely shut off by maintaining the shut-off valve in the closed state at least in an abnormal state, for example, maintaining the shut-off valve in the closed state. Thus, even if a fluid leak or the like occurs in the pressure increasing mechanism, the high-pressure working fluid (hydraulic pressure) can be prevented from flowing backward from the power hydraulic pressure source via the pressure increasing mechanism to the master cylinder. In addition, for example, if a fluid leak or the like occurs in the brake system connected to the pressure increasing mechanism, the hydraulic pressure of the power hydraulic pressure source can be prevented from wastefully being decreased (consumed). Moreover, if any abnormality occurs in the vehicle brake device, and, for example, the hydraulic pressure cannot be supplied from the power hydraulic pressure source, the shut-off valve can be brought into the open state, the pressure increasing mechanism can use the hydraulic pressure accumulated in the power hydraulic pressure source to generate the hydraulic pressure having the predetermined ratio with respect to the hydraulic pressure by the master cylinder, and the hydraulic pressure can be transmitted to the master cylinder or to a wheel cylinder for applying a braking force to a wheel.

Further, in this case, the vehicle brake device may include: a valve mechanism for selectively switching between the hydraulic pressure output from the power hydraulic pressure source and the hydraulic pressure output from the pressure increasing mechanism so as to transmit the selected hydraulic pressure to a wheel cylinder for applying a braking force to a wheel; and control means for controlling an operation of the valve mechanism. Further, in this cases, the control means may be configured to: switch the shut-off valve to the open state in a normal state in which the valve mechanism is controlled so that the hydraulic pressure from the power hydraulic pressure source is selected and is transmitted to the wheel cylinder; and switch the shut-off valve to the closed state in an abnormal state in which there is a possibility of occurrence of a leak of the working fluid in the pressure increasing mechanism. Further, in this cases, the control means may be configured to: switch the shut-off valve to the open state in a normal state in which the valve mechanism is controlled so that the hydraulic pressure from the power hydraulic pressure source is selected and is transmitted to the wheel cylinder; and switch the shut-off valve to the closed state in an abnormal state in which there is a possibility of occurrence of a leak of the working fluid in any one of a brake system between the power hydraulic pressure source and the wheel cylinder and a brake system between the pressure increasing mechanism and the wheel cylinder. Further, in those cases, the control means may switch the shut-off valve to the closed state in a normal state where the valve mechanism is controlled so that the hydraulic pressure from the power hydraulic pressure source is selected and is transmitted to the wheel cylinder.

Note that, in those cases, the control means may include determination means for determining whether or not there is a possibility of occurrence of a leak of the working fluid in the pressure increasing mechanism, and shut-off valve switching means for switching the shut-off valve to the open state in the normal state in which the valve mechanism is controlled so that the hydraulic pressure from the power hydraulic pressure source is selected and is transmitted to the wheel cylinder, and for switching the shut-off valve to the closed state in the abnormal state in which there is a possibility of occurrence of a leak of the working fluid in the pressure increasing mechanism based on the determination by the determination means. Moreover, the determination means may determine whether or not there is a possibility of occurrence of a leak of the working fluid in any one of the brake systems between the power hydraulic pressure source and the wheel cylinder and between the pressure increasing mechanism and the wheel cylinder, and based on the determination by the determination means, the shut-off valve switching means may switch the shut-off valve to the open state in the normal state in which the valve mechanism is controlled so that the hydraulic pressure from the power hydraulic pressure source is selected and is transmitted to the wheel cylinder, and may switch the shut-off valve to the closed state in the abnormal state in which there is a possibility of occurrence of a leak of the working fluid in any one of the brake system between the power hydraulic pressure source and the wheel cylinder and the brake system between the pressure increasing mechanism and the wheel cylinder. Further, the shut-off valve switching control means may switch the shut-off valve to the closed state in the normal state in which the valve mechanism is controlled so that the hydraulic pressure from the power hydraulic pressure source is selected and is transmitted to the wheel cylinder.

As a result, the shut-off valve, which is a normally-open electromagnetic on-off valve, may be switched to and maintained in the open state in the normal state. On the other hand, the shut-off valve, which is a normally-open electromagnetic on-off valve, may be switched to and maintained in the closed state only in an abnormal state in which there is a possibility of occurrence of a leak of the working fluid in the pressure increasing mechanism, or an abnormal state in which there is a possibility of occurrence of a leak of the working fluid in any one of the brake systems between the power hydraulic pressure source and the wheel cylinders (usually the four brake systems for the front and rear right and left wheels) and the brake systems (specifically, a cut valve or the like) between the pressure increasing mechanism and wheel cylinders communicating to the pressure increasing mechanism. Alternatively, the shut-off valve may be switched to and maintained in the closed state as necessary even in the normal state.

As a result, particularly if the shut-off valve is maintained in the open state in the normal state, electric power does not need to be always supplied for maintaining the shut-off valve in the closed state, resulting in a significant decrease in the power consumption. Moreover, the electric power does not need to be always supplied, and heat generated by the consumption of the electric power can thus be significantly decreased, thereby eliminating heat radiation measures, resulting in an achievement of cost reduction.

On this occasion, whether or not a leak of the working fluid occurs in the pressure increasing mechanism may be determined based on, for example, a state where the a frequency of an operation of the pressurizing pump of the power hydraulic pressure source communicating to the pressure increasing mechanism to maintain the hydraulic pressure tending to decrease to a certain pressure is increasing, or a state where the a relationship held between the hydraulic pressure generated in the master cylinder caused by a backward flow of the working fluid in response to the operation by the driver on the brake pedal and an operation amount (stroke) of the brake pedal is changed. Moreover, whether or not a leak of the working fluid occurs in any one of the brake system between the power hydraulic pressure source and the wheel cylinder and the brake system between the pressure increasing mechanism and the wheel cylinder communicating to the pressure increasing mechanism may be determined based on, for example, an oil level abnormality in a reservoir provided on the master cylinder and a low pressure abnormality, a pressure rising abnormality, and the like of the working fluid communicating in the brake device.

Another feature of the vehicle brake device according to one embodiment of the present invention resides in that the vehicle brake device further includes a filter for filtering at least the working fluid flowing from the master cylinder into the pressure increasing mechanism, the filter being provided on a passage for connecting the master cylinder and the pressure increasing mechanism to each other. In this case, the vehicle brake device may further include at least one of a filter provided on the passage for connecting the power hydraulic pressure source and the pressure increasing mechanism to each other, for filtering at least the working fluid flowing from the power hydraulic pressure source into the pressure increasing mechanism, or a filter provided on an output passage from the pressure increasing mechanism, for filtering at least the working fluid flowing out from the pressure increasing mechanism.

As a result, a filter for filtering the working fluid flowing from the master cylinder into the pressure increasing mechanism may be provided at least on the passage (pilot passage) for connecting the master cylinder and the pressure increasing mechanism to each other. As a result, for example, foreign matters having any influence on sealing performance in the pressure increasing mechanism may be prevented from entering the pressure increasing mechanism, and a fluid leak or the like may be effectively prevented from occurring in the pressure increasing mechanism. Further, by providing filters for filtering the working fluid on the passage for connecting the power hydraulic pressure source and the pressure increasing mechanism to each other and, for example, on an output passage connecting the pressure increasing mechanism and the wheel cylinder to each other, foreign matters having any influence on, for example, the opening/closing operations of the respective valves constructing the master cylinder and the valve mechanism provided on a downstream side of the pressure increasing mechanism may be prevented from entering into the valve mechanism, and a fluid leak or the like may be effectively prevented from occurring in the brake systems. Thus, for example, a time period and a frequency of maintaining the shut-off valve in the closed state can be decreased, and, as a result, reduction in power consumption and reduction in generated heat amount can be more easily achieved.

Further, another feature of the vehicle brake device according to one embodiment of the present invention resides in that: the valve mechanism includes a linear control valve for adjusting the hydraulic pressure transmitted from the power hydraulic pressure source to the wheel cylinder, and a plurality of electromagnetic on-off valves for realizing connection or shutoff between the linear control valve and the wheel cylinder and connection or shutoff between the pressure increasing mechanism and the wheel cylinder; and the control means is configured to: control drive of the plurality of electromagnetic on-off valves so as to connect the power hydraulic pressure source and the wheel cylinder to each other via the linear control valve, and so as to shut off the connection between the pressure increasing mechanism and the wheel cylinder when operations of respective valves constructing the valve mechanism are normal; control the drive of the plurality of electromagnetic on-off valves so as to shut off the connection between the power hydraulic pressure source and the wheel cylinder via the linear control valve, and so as to connect the pressure increasing mechanism and the wheel cylinder to each other when an abnormality occurs in the operations of the respective valves constructing the valve mechanism; and further switch the shut-off valve to the open state.

In this case, the vehicle brake device may include hydraulic pressure detection means for detecting the hydraulic pressure output from the master cylinder, and the control means may control the drive of the linear control valve of the valve mechanism based on the hydraulic pressure detected by the hydraulic pressure detection means.

As a result, when the linear control valve (pressure increasing linear control valve and pressure decreasing linear control valve) and the plurality of electromagnetic on-off valves (cut valve, holding valves, and pressure decreasing valves) constructing the valve mechanism normally operate, the hydraulic pressure from the power hydraulic pressure source may be adjusted by the linear control valve based on, for example, the detected hydraulic pressure output from the master cylinder, and the adjusted hydraulic pressure may be transmitted via the electromagnetic on-off valves to the respective wheel cylinders (usually the wheel cylinders provided at four positions of the front right and left wheels). As a result, braking forces may be appropriately generated on the respective wheels. On the other hand, when the abnormality occurs in the operations of the linear control valve (pressure increasing linear control valve and pressure decreasing linear control valve) and the plurality of electromagnetic on-off valves (cut valve, holding valves, and pressure decreasing valves) constructing the valve mechanism, for example, when an abnormality or the like in an electric system or an abnormality in the control means itself occurs, the shut-off valve may be brought into the open state, and the pressure increasing mechanism and the wheel cylinder may be connected to each other. As a result, for example, even if the supply of the hydraulic pressure from the power hydraulic pressure source is shut off, the hydraulic pressure may be transmitted to the wheel cylinder, thereby generating the braking force on the wheel.

In this case, when the abnormality occurs in the operations of the respective valves constructing the valve mechanism, the connection between the power hydraulic pressure source and the wheel cylinder via the linear control valve may be shut off, and the pressure increasing mechanism and the wheel cylinder provided for each of two wheels located at front and rear positions diagonal to each other out of respective front and rear right and left wheels of a vehicle may be connected to each other.

As a result, under a state in which the hydraulic pressure is supplied from the pressure increasing mechanism, the hydraulic pressure increased by the pressure increasing mechanism may be preferentially transmitted to the wheel cylinders provided for the two wheels at the front and rear positions diagonal to each other. As a result, a behavior change (such as generation of a yaw) of a vehicle when the wheels generate braking forces may be appropriately restrained.

Further, in those case, the control means may be configured to, in an abnormal state in which there is a possibility of occurrence of a leak of the working fluid in any one of brake systems between the power hydraulic pressure source and respective wheel cylinders provided for respective front and rear right and left wheels of a vehicle: control the drive of the plurality of electromagnetic on-off valves of the valve mechanism so as to maintain the connection between the power hydraulic pressure source and the respective wheel cylinders provided on a rear right and left wheel side of the vehicle, shut off the connection between the power hydraulic pressure source and the respective wheel cylinders provided on a front right and left wheel side of the vehicle, and connect at least the pressure increasing mechanism and the wheel cylinder provided on one side of the front right and left wheel side of the vehicle to each other; and maintain the shut-off valve in the closed state.

Further, in this case, the master cylinder may generate the hydraulic pressure in response to the operation by the driver on the brake pedal, and output the hydraulic pressure via a plurality of systems. The valve mechanism may include an electromagnetic on-off valve for realizing connection or shutoff between one of the plurality of systems of the master cylinder and the wheel cylinder provided on another side of the front right and left wheel side of the vehicle. The control means may be configured to, in the abnormal state in which there is a possibility of occurrence of a leak of the working fluid in any one of the brake systems between the power hydraulic pressure source and the respective wheel cylinders provided for the respective front and rear right and left wheels of the vehicle, control the drive of the plurality of electromagnetic on-off valves of the valve mechanism so as to connect the pressure increasing mechanism and the wheel cylinder provided on the one side of the front right and left wheel side of the vehicle to each other, and to connect the wheel cylinder provided on the another side of the front right and left wheel side of the vehicle and the one of the plurality of systems of the master cylinder to each other.

As a result, in the normal state in which the hydraulic pressure is transmitted from the power hydraulic pressure source to the respective wheel cylinders, if a leak of the working fluid from any one of the brake systems occurs, a brake system connecting the power hydraulic pressure source and the wheel cylinders on the rear right and left wheel side to each other, a brake system connecting the pressure increasing mechanism and the wheel cylinder on one side of the front right and left wheel side to each other when the shut-down valve is in the closed state, and a brake system connecting the master cylinder and the wheel cylinder on another side of the front right and left wheel side to each other may respectively be isolated from one another. As a result, even if a leak of the working fluid occurs in any one of the three brake systems, the respective brake systems are isolated from each one another, and do not affect the hydraulic pressures of the other brake systems. Thus, the hydraulic pressure may be transmitted to the wheel cylinders via the brake systems other than the brake system in which the leak of the working fluid occurs, thereby generating appropriate braking forces on the wheels.

### Brief Description of Drawings

FIG. 1 is a schematic system diagram of a vehicle brake device according to a first embodiment of the present invention.
FIG. 2 is a schematic cross-sectional view illustrating a configuration of a pressure increasing mechanism of FIG. 1.
FIG. 3 is a diagram illustrating a linear control mode by the vehicle brake device according to the first embodiment of the present invention.
FIG. 4 is a diagram illustrating a backup mode by the vehicle brake device according to the first embodiment of the present invention when a fluid leak occurs.
FIG. 5 is a diagram illustrating a linear control mode by the vehicle brake device according to a modified example of the first embodiment of the present invention.
FIG. 6 is a schematic system diagram of a vehicle brake device according to a second embodiment of the present invention.
FIG. 7 is a schematic cross-sectional view illustrating filters provided on a high pressure supply passage, a pilot passage, and a master pressure pipe communicating to the pressure increasing mechanism in FIG. 6.

### Description of Embodiments

### a. First Embodiment

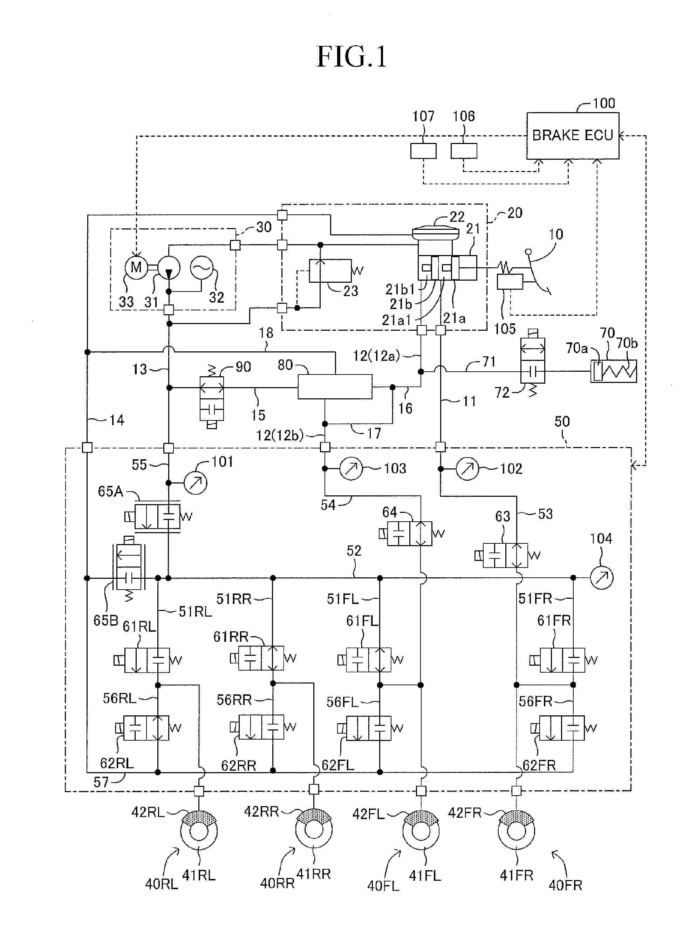

Now, a vehicle brake device according to an embodiment of the present invention is described referring to the drawings. FIG. 1 is a schematic system diagram of the vehicle brake device according to a first embodiment of the present invention.

The vehicle brake device includes a brake pedal 10, a master cylinder unit 20, a power hydraulic pressure generation device 30, a hydraulic pressure control valve device 50, a pressure increasing mechanism 80, a pressure increasing mechanism cut valve 90, and a brake ECU 100 for brake control. Brake units 40FR, 40FL, 40RR, and 40RL installed on respective wheels include brake rotors 41 FR, 41 FL, 41 RR, and 41 RL, and wheel cylinders 42FR, 42FL, 42RR, and 42RL integrated into brake calipers. The brake units 40 are not limited to the case where disk brakes are installed on all the four wheels, and, for example, drum brakes may be installed on all the four wheels, or the disk brakes and the drum brakes may be arbitrarily combined in such a way that the disk brakes are installed on the front wheels and the drum brakes are installed on the rear wheels. In the following description, configurations provided for the respective wheels are denoted by suffixes FR for the front right wheel, FL for the front left wheel, RR for the rear right wheel, and RL for the rear left wheel, but if the specification of the wheel position is not particularly necessary, the suffix is omitted.

The wheel cylinders 42FR, 42FL, 42RR, and 42RL are connected to the hydraulic pressure control valve device 50, and receive transmitted hydraulic pressures of the working fluid (brake fluid) supplied from the hydraulic pressure control valve device 50. Then, brake pads are pressed against the brake rotors 41 FR, 41 FL, 41 RR, and 41 RL rotating along with the wheels by the hydraulic pressure transmitted (supplied) from the hydraulic pressure control valve device 50, thereby applying braking forces to the wheels.

The master cylinder unit 20 includes a master cylinder 21 and a reservoir 22. The master cylinder 21 is of a tandem type including pressurizing pistons 21 a and 21 b, and generates master cylinder pressures Pmc_FR and Pmc_FL respectively having predetermined boost ratios to the pedal stepping force input in response to the stepping operation on the brake pedal 10. The reservoir 22 for storing the working fluid is provided at a top of the master cylinder 21. As a result, in the master cylinder 21, when the stepping operation on the brake pedal 10 is released, and the pressurizing pistons 21a and 21b are retracted, pressurizing chambers 21a1 and 21 b1 formed by the pressurizing pistons 21 a and 21 b communicate to the reservoir 22. Note that, the pressurizing chambers 21 a1 and 21 b1 respectively communicate via master pressure pipes 11 and 12 described later to the hydraulic pressure control valve device 50.

The power hydraulic pressure generation device 30 is a power hydraulic pressure source (power supply), and includes a pressurizing pump 31 and an accumulator 32. The pressurizing pump 31 has an inlet opening connected to the reservoir 22 and an outlet opening connected to the accumulator 32, and drives a motor 33 to pressurize the working fluid. The accumulator 32 converts pressure energy of the working fluid pressurized by the pressurizing pump 31 into pressure energy of a filler gas such as nitrogen, thereby accumulating the pressure energy. Moreover, the accumulator 32 is connected to a relief valve 23 provided to the master cylinder unit 20. The relief valve 23 opens when the pressure of the working fluid increases to a predetermined pressure or more, thereby returning the working fluid to the reservoir 22.

In this way, the vehicle brake device includes, as the hydraulic pressure source for applying a hydraulic pressure of the working fluid to the wheel cylinders 42, the master cylinder 21 for applying the hydraulic pressure by using the pedal stepping force input by the driver via the brake pedal 10, and the power hydraulic pressure generation device 30 for applying the hydraulic pressure independently of the master cylinder 21. Then, in the vehicle brake device, the master cylinder 21 (more specifically, the pressurizing chambers 21a1 and 21b1) and the power hydraulic pressure generation device 30 are connected respectively via the master pressure pipes 11 and 12 and an accumulator pressure pipe 13 to the hydraulic pressure control valve device 50. Moreover, the reservoir 22 is connected via a reservoir pipe 14 to the hydraulic pressure control valve device 50. Note that, in the following description, regarding the master pipe 12, an upstream side (input side) with respect to the pressure increasing mechanism 80 is referred to as master pressure pipe 12a, and a downstream side (output side) with respect to the pressure increasing mechanism 80 is referred to as master pressure pipe 12b for discrimination.

On this occasion, a stroke simulator 70 is connected via a simulator flow passage 71 and a simulator cut valve 72, which is a normally-closed electromagnetic on-off valve, to the master pressure pipe 12a. The stroke simulator 70 includes a piston 70a and a spring 70b, and introduces the working fluid in an amount corresponding to a brake operation amount of the brake pedal 10 by the driver into an inside thereof when the simulator cut valve 72 is in the open state. Then, the stroke simulator 70 displaces the piston 70a against the biasing force of the spring 70b in synchronous with the introduction of the working fluid into the inside, thereby enabling a stroke operation of the brake pedal 10 by the driver, and generating a reaction force corresponding to the brake operation amount to provide the driver with appropriate brake operation feeling. It should be understood that the stroke simulator 70 can be connected to the master pressure pipe 11.

The hydraulic pressure control valve device 50 includes four individual flow passages 51 FR, 51 FL, 51 RR, and 51 RL connected to the respective wheel cylinders 42FR, 42FL, 42RR, and 42RL, a main flow passage 52 for communicating to the individual flow passages 51 FR, 51 FL, 51 RR, and 51 RL, master pressure flow passages 53 and 54 for connecting the individual flow passages 51 FR and 51 FL and the master pressure pipes 11 and 12 (12b), respectively, to each other, and an accumulator pressure flow passage 55 for connecting the main flow passage 52 and the accumulator pressure pipe 13 to each other. The master pressure flow passages 53 and 54 and the accumulator pressure flow passage 55 are connected in parallel with one another to the main flow passage 52.

Holding valves 61 FR, 61 FL, 61 RR, and 61 RL are respectively provided on the individual flow passages 51 FR, 51 FL, 51 RR, and 51 RL. The holding valves 61 FL and 61 RR respectively provided on the brake unit 40FL for the front left wheel and on the brake unit 40RR for the rear right wheel are electromagnetic normally-open on-off valves which are each configured to maintain an open state by a biasing force of a spring in a non-current supply state of a solenoid, and be brought into a closed state only in a current supply state of the solenoid. On the other hand, the holding valves 61 FR and 61 RL respectively provided on the brake unit 40FR for the front right wheel and on the brake unit 40RL for the rear left wheel are normally-closed electromagnetic on-off valves which are each configured to maintain a closed state by a biasing force of a spring in a non-current supply state of a solenoid, and be brought into an open state only in a current supply state of the solenoid.

As a result, in each of the set of the holding valves 61 FR and 61 FL respectively provided on the right and left brake units 40FR and 40FL on the front wheel side, and the set of the holding valves 61 RR and 61 RL respectively provided on the right and left brake units 40RR and 40RL on the rear wheel side, one of the holding valves is the normally-open electromagnetic on-off valve, and the other is the normally-closed electromagnetic on-off valve. In other words, the holding valves 61 FL and 61 RR provided for the brake units 40FL and 40RR corresponding to one set of the two wheels located at the front and rear diagonal positions are configured to be normally-open electromagnetic on-off valves, and the holding valves 61 FR and 61 RL provided for the brake units 40FR and 40RL corresponding to the other set of the two wheels located at the front and rear diagonal positions are configured to be normally-closed electromagnetic on-off valves.

Moreover, pressure decreasing individual flow passages 56FR, 56FL, 56RR, and 56RL are respectively connected to the individual flow passages 51 FR, 51 FL, 51 RR, and 51 RL. The respective pressure decreasing individual flow passages 56 are connected to a reservoir flow passage 57. The reservoir flow passage 57 is connected via the reservoir pipe 14 to the reservoir 22. Pressure decreasing valves 62FR, 62FL, 62RR, and 62RL are respectively provided at intermediate portions of the pressure decreasing individual flow passages 56FR, 56FL, 56RR, and 56RL. The respective pressure decreasing valves 62FR, 62FL, and 62RR are normally-closed electromagnetic on-off valves which are each configured to maintain a closed state by a biasing force of a spring in a non-current supply state of a solenoid, and be brought into an open state only in a current supply state of the solenoid. The pressure decreasing valve 62RL is a normally-open electromagnetic on-off valve which is configured to maintain an open state by a biasing force of a spring in a non-current supply state of a solenoid, and be brought into the closed state only in a current supply state of the solenoid. In the open state, each pressure decreasing valve 62 causes the working fluid to flow from the wheel cylinder 42 via the pressure decreasing individual flow passage 56 to the reservoir flow passage 57, thereby decreasing a wheel cylinder pressure (corresponding to a control pressure Px described later).

Master cut valves 63 and 64 are respectively provided at intermediate portions of the master pressure flow passages 53 and 54. The respective master cut valves 63 and 64 are normally-open electromagnetic on-off valves which are each configured to maintain an open state by a biasing force of a spring in a non-current supply state of a solenoid, and be brought into a closed state only in a current supply state of the solenoid. By providing the master cut valves 63 and 64 as described above, when the master cut valves 63 and 64 are in the closed state, the communication of the working fluid is shut off by shutting off the connection between the master cylinder 21 (and the pressure increasing mechanism 80) and the wheel cylinders 42FR and 42FL, and when the master cut valves 63 and 64 are in the open state, the communication of the working fluid is permitted through connection between the master cylinder 21 (and the pressure increasing mechanism 80) and the wheel cylinders 42FR and 42FL.

A pressure increasing linear control valve 65A is provided at an intermediate portion of the accumulator pressure flow passage 55. Moreover, a pressure decreasing linear control valve 65B is provided between a connected point of the accumulator pressure flow passage 55 to the main flow passage 52 and the reservoir flow passage 57. The pressure increasing linear control valve 65A and the pressure decreasing linear control valve 65B are normally-closed electromagnetic linear control valves which are each configured to maintain a closed state by a biasing force of a spring in a non-current supply state of a solenoid, and increase a valve opening degree along with an increase in current supply amount (current value) to the solenoid. A detailed description is not given of the pressure increasing linear control valve 65A and the pressure decreasing linear control valve 65B, but each of the pressure increasing linear control valve 65A and the pressure decreasing linear control valve 65B maintains the closed state by a valve closing force represented by a difference between a spring force of biasing a valve body toward a valve closing direction by the built-in spring and a pressure difference force of biasing the valve body toward a valve opening direction by a pressure difference between a primary side (inlet side) through which the working fluid relatively high in pressure communicates and a secondary side (outlet side) through which the working fluid relatively low in pressure communicates.

On the other hand, each of the pressure increasing linear control valve 65A and the pressure decreasing linear control valve 65B opens at an opening degree corresponding to a balance between the forces acting on the valve body if an electromagnetic attraction force generated by the current supply to the solenoid and acting toward the direction to open the valve body exceeds the valve closing force, in other words, if a relationship of "electromagnetic attraction force>valve closing force (=spring force-pressure difference force)" holds true. Thus, by controlling the current supply amount (current value) to the solenoid, each of the pressure increasing linear control valve 65A and the pressure decreasing linear control valve 65B can adjust the opening degree corresponding to the pressure difference force, namely, the pressure difference between the primary side (inlet side) and the secondary side (outlet side). On this occasion, the pressure increasing linear control valve 65A and the pressure decreasing linear control valve 65B correspond to linear control valves according to the present invention. In the following description, if the pressure increasing linear control valve 65A and the pressure decreasing linear control valve 65B do not need to be distinguished from each other, they are also simply referred to as linear control valve 65.

Moreover, the vehicle brake device includes the pressure increasing mechanism 80 for increasing (servo-controlling) the master cylinder pressure Pmc_FL output from the pressurizing chamber 21 b1 of the master cylinder 21, and supplying the wheel cylinder 42FL with the increased master cylinder pressure. A description is now given of the pressure increasing mechanism 80. Any structure which can increase (servo-control) the master cylinder pressure Pmc_FL by means of a mechanical operation as described later can be employed as the pressure increasing mechanism 80. Moreover, a description is given of such a case that the pressure increasing mechanism 80 is provided on the master pressure pipe 12, but it should be understood that such an embodiment that the pressure increasing mechanism 80 is provided on the master pressure pipe 11 is possible.

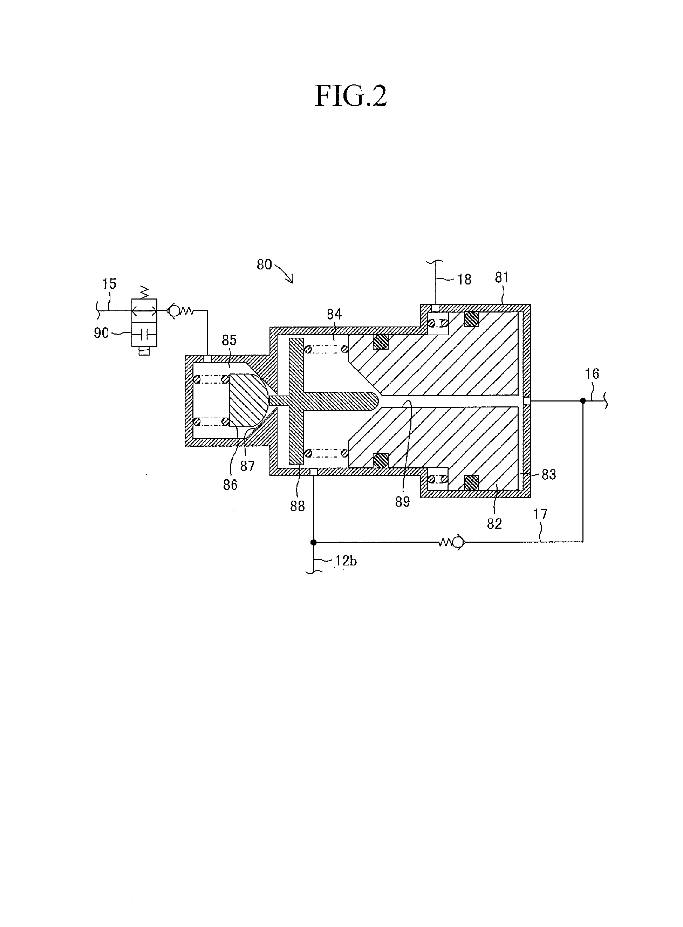

As illustrated in FIG. 2, the pressure increasing mechanism 80 includes a housing 81, and a stepped piston 82 fitted into the housing 81 in a liquid-tight and slidable manner. A large diameter chamber 83 is provided on a large diameter side of the stepped piston 82, and a small diameter chamber 84 is provided on a smaller diameter side thereof. The small diameter chamber 84 can communicate to a high pressure chamber 85 connected to the accumulator 32 of the power hydraulic pressure generation device 30 via a high pressure supply valve 86 and a valve seat 87. As illustrated in FIG. 2, the high pressure supply valve 86 is pressed against the valve seat 87 by a biasing force of a spring in the high pressure chamber 85, and is a normally-closed valve.

Moreover, a valve opening member 88 is provided in the small diameter chamber 84 so as to oppose the high pressure supply valve 86, and a spring is provided between the valve opening member 88 and the stepped piston 82. A biasing force of the spring acts toward a direction of separating the valve opening member 88 from the stepped piston 82. Moreover, as illustrated in FIG. 2, a return spring is provided between a step portion of the stepped piston 82 and the housing 81, thereby biasing the stepped piston 82 toward a backward moving direction. Note that, a stopper (not shown) is provided between the stepped piston 82 and the housing 81, thereby regulating a forward movement end position of the stepped piston 82.

Further, a communication passage 89 for communicating the large diameter chamber 83 and the small diameter chamber 84 to each other is formed in the stepped piston 82. The communication passage 89 causes the large diameter chamber 83 and the small diameter chamber 84 to communicate to each other in a state where the stepped piston 82 is separated from the valve opening member 88 as illustrated in FIG. 2 at at least a backward movement end position of the stepped piston 82. When the stepped piston 82 moves forward to abut against the valve opening member 88, the communication passage 89 is shut off. The pressure increasing mechanism 80 configured in this way operates as a mechanical pressure increasing device (mechanical valve).

Note that, as illustrated in FIGS. 1 and 2, the high pressure chamber 85 and the power hydraulic pressure generation device 30 are connected to each other via a high pressure supply passage 15, and a check valve for permitting flow of the working fluid from the power hydraulic pressure generation device 30 to the high pressure chamber 85 and preventing flow in an opposite direction is provided in addition to the pressure increasing mechanism cut valve 90 on the high pressure supply flow passage 15. The pressure increasing mechanism cut valve 90 is a normally-open electromagnetic on-off valve which is configured to maintain an open state by a biasing force of a spring in a non-current supply state of a solenoid, and be brought into a closed state only in a current supply state of the solenoid. Note that, the pressure increasing mechanism cut valve 90 corresponds to a shut-off valve according to the present invention.

The pressure increasing mechanism cut valve 90 provided in this way shuts off the transmission of the hydraulic pressure, specifically the communication of the working fluid, between the power hydraulic pressure generation device 30 (more specifically, the pressurizing pump 31 and the accumulator 32) and the high pressure chamber 85 in the closed state caused by the current supply to the solenoid. Thus, even if a fluid leak occurs in the pressure increasing mechanism 80 by an abnormality in sealing performance or the like, the pressure increasing mechanism cut valve 90 maintained in the closed state can surely prevent the working fluid at a high pressure from flowing backward from the accumulator 32 via the pressure increasing mechanism 80 and the master pressure pipe 12a to the master cylinder 21. Moreover, the communication (connection) via the high pressure supply passage 15 between the accumulator 32 and the high pressure chamber 85 of the pressure increasing mechanism 80 is shut off, and, thus, even if a fluid leak occurs in the pressure increasing mechanism 80 by an abnormality in sealing performance or the like, the hydraulic pressure (corresponding to an accumulator pressure Pacc described later) can be surely prevented from decreasing (being consumed) in the accumulator 32.

Moreover, the check valve provided in the high pressure supply passage 15 permits the flow of the working fluid from the power hydraulic pressure generation device 30 to the high pressure chamber 85 when the hydraulic pressure in the power hydraulic pressure generation device 30 (more specifically, the accumulator 32) is higher than the hydraulic pressure in the high pressure chamber 85, but prevents the flows in both directions in the closed state when the hydraulic pressure in the power hydraulic pressure generation device 30 is equal to or less than the hydraulic pressure in the high pressure chamber 85. Thus, when the pressure increasing mechanism cut valve 90 is in the open state, even if a fluid leak occurs in the power hydraulic pressure generation device 30, the working fluid is prevented from flowing backward from the high pressure chamber 85 to the power hydraulic pressure generation device 30, and the hydraulic pressure in the small diameter chamber 84 is prevented from decreasing.

Moreover, the master pressure pipe 12a and the large diameter chamber 83 of the pressure increasing mechanism 80 are connected via a pilot passage 16 to each other, and a bypass passage 17 for connection while bypassing the pressure increasing mechanism 80 is provided between the pilot passage 16 and an output side (namely, the master pressure pipe 12b communicating to the small diameter chamber 84) of the pressure increasing mechanism 80. Then, a check valve for permitting the working fluid to flow from the pilot passage 16 (master pressure pipe 12a) to the master pressure pipe 12b, which is an output side of the pressure increasing mechanism 80, and preventing the working fluid from flowing in the opposite direction is provided in the bypass passage 17. Further, a reservoir passage 18 is provided between a space formed by a step portion of the stepped piston 82 and the housing 81, and the reservoir pipe 14 communicating to the reservoir 22.

A brief specific description is given of the operation of the pressure increasing mechanism 80. When the working fluid (master cylinder pressure Pmc_FL) is supplied from the master cylinder 21 via the master pressure pipe 12a and the pilot passage 16 to the large diameter chamber 83 in the pressure increasing mechanism 80, the working fluid is supplied via the communication passage 89 to the small diameter chamber 82. Then, when the force in the forward moving direction acting on the stepped piston 82 by the supply of the working fluid (master cylinder pressure Pmc_FL) (forward moving force caused by the master cylinder pressure Pmc_FL acting on the large diameter chamber 83) becomes larger than the biasing force of the return spring, the stepped piston 82 moves forward. When the stepped piston 82 thus abuts against the valve opening member 88, and the communication passage 89 is shut off, the hydraulic pressure in the small diameter chamber 84 increases along with the forward movement of the stepped piston 82, and the working fluid increased in pressure (namely, the servo pressure) is output via the master pressure pipe 12b to the master pressure flow passage 53 of the hydraulic pressure control valve device 50.

Moreover, when the high pressure supply valve 86 is switched to the open state by the forward movement of the valve opening member 88, the high pressure working fluid is supplied from the high pressure chamber 85 to the small diameter chamber 84, resulting in a further increase in hydraulic pressure of the small diameter chamber 84. In this case, when the pressure increasing mechanism cut valve 90 is in the closed state and the hydraulic pressure (accumulator pressure Pacc) of the working fluid accumulated in the accumulator 32 of the power hydraulic pressure generation device 30 is higher than the hydraulic pressure in the high pressure chamber 85, the hydraulic pressure (accumulator pressure Pacc) in the accumulator 32 is supplied via the check valve on the high pressure supply passage 15 to the high pressure chamber 85, and is then supplied to the small diameter chamber 84. Then, in the stepped piston 82, the hydraulic pressure in the large diameter chamber 83, namely, the master cylinder pressure Pmc_FL is adjusted to such a magnitude that the force acting on the large diameter side (master cylinder pressure Pmc_FL×pressure receiving area) and the force acting on the small diameter side (servo pressure×pressure receiving area) are balanced each other, and the adjusted hydraulic pressure is output. Thus, the pressure increasing mechanism 80 can be considered as a mechanical booster mechanism.

On the other hand, when the pressure increasing mechanism cut valve 90 is in the open state and the hydraulic pressure (accumulator pressure Pacc) in the accumulator 32 is equal to or less than the hydraulic pressure in the high pressure chamber 85, the check valve provided on the high pressure supply passage 15 prevents the flow of the working fluid between the accumulator 32 and the high pressure chamber 85, and the stepped piston 82 cannot move forward any more. Moreover, the stepped piston may abut against the stopper to be restrained from moving forward. When the master cylinder pressure Pmc_FL provided from the master cylinder 21 increases to be higher than the hydraulic pressure in the small diameter chamber 84 in this state, the master cylinder pressure Pmc_FL is supplied via the bypass passage 17 and the check valve to the master pressure pipe 12b.

The power hydraulic pressure generation device 30 and the hydraulic pressure control valve device 50 are controlled to be driven by the brake ECU 100 serving as control means. The brake ECU 100 includes a microcomputer constructed by a CPU, a ROM, a RAM, and the like as a main component, and includes a pump drive circuit, an electromagnetic valve drive circuit, an interface for inputting various sensor signals, and a communication interface. All the respective electromagnetic on-off valves 61 to 64, 66, 72, and 90 and the linear control valves 65 provided in the hydraulic pressure control valve device 50 are connected to the brake ECU 100, and the open/closed states and the opening degrees (for the linear control valves 65) are controlled by solenoid drive signals output from the brake ECU 100. Moreover, the motor 33 provided to the power hydraulic pressure generation device 30 is also connected to the brake ECU 100, and is controlled to be driven by a motor drive signal output from the brake ECU 100.

The hydraulic pressure control valve device 50 is provided with an accumulator pressure sensor 101, master cylinder pressure sensors 102 and 103, and a control pressure sensor 103 as hydraulic pressure detection means. The accumulator pressure sensor 101 detects a hydraulic pressure of the working fluid in the accumulator pressure flow passage 55 on the power hydraulic pressure generation device 30 side (upstream side) with respect to the pressure increasing linear control valve 65A, namely, the accumulator pressure Pacc because the accumulator pressure flow passage 55 communicates via the accumulator pressure pipe 13 to the accumulator 32. The accumulator pressure sensor 101 outputs a signal representing the detected accumulator pressure Pacc to the brake ECU 100. With this, the brake ECU 100 reads the accumulator pressure Pacc at a predetermined cycle, and, if the accumulator pressure Pacc is less than the predetermined lowest set pressure, the brake ECU 100 drives the motor 33 to pressurize the working fluid by the pressurizing pump 31, thereby controlling the accumulator pressure Pacc to be always maintained within a set pressure range.

The master cylinder pressure sensor 102 detects a hydraulic pressure of the working fluid in the master pressure flow passage 53 on the master cylinder 21 side (upstream side) with respect to the master cut valve 63, namely, the master cylinder pressure Pmc_FR because the master pressure flow passage 53 communicates via the master pressure pipe 11 to the pressurizing chamber 22a1. The master cylinder pressure sensor 103 detects a hydraulic pressure of the working fluid in the master pressure flow passage 54 on the master cylinder 21 side (upstream side) with respect to the master cut valve 64, namely, the master cylinder pressure Pmc_FL because the master pressure flow passage 54 communicates via the master pressure pipe 12 to the pressurizing chamber 22b1. The master cylinder pressure sensors 102 and 103 output signals representing the detected master cylinder pressure Pmc_FR and Pmc_FL to the brake ECU 100. The control pressure sensor 104 outputs a signal representing the control pressure Px (corresponding to the wheel cylinder pressure at each wheel cylinder 42) which is a hydraulic pressure of the working fluid in the main flow passage 52 to the brake ECU 100.

Moreover, a stroke sensor 105 provided on the brake pedal 10 is connected to the brake ECU 100. The stroke sensor 105 outputs, to the brake ECU 100, a signal representing a pedal stroke Sm which is a stepping amount (operation amount) of the brake pedal 10 by the driver. Moreover, a wheel speed sensor 106 is connected to the brake ECU 100. The wheel speed sensor 106 detects a wheel speed Vx, which is a rotational speed of the front and rear right and left wheels, and outputs the signal representing the detected wheel speed Vx to the brake ECU 100. Further, an indicator 107 for notifying the driver of an abnormality occurring on the vehicle brake device is connected to the brake ECU 100. The indicator 107 follows the control by the brake ECU 100, and notifies the driver of the occurring abnormality.

A description is now given of brake control carried out by the brake ECU 100. The brake ECU 100 selectively carries out the brake control in two control modes, which are a linear control mode (4S mode) in which the hydraulic pressure (more specifically, the accumulator pressure Pacc) output from the power hydraulic pressure generation device 30 is adjusted by the linear control valves 65, and the adjusted hydraulic pressure is transmitted to the respective wheel cylinders 42, and a backup mode (2S mode) in which at least the master cylinder pressures Pmc_FR and Pmc_FL generated in the master cylinder 21 in response to the pedal stepping force by the driver on the brake pedal 10 are transmitted to the wheel cylinders 42 (42FR and 42FL).

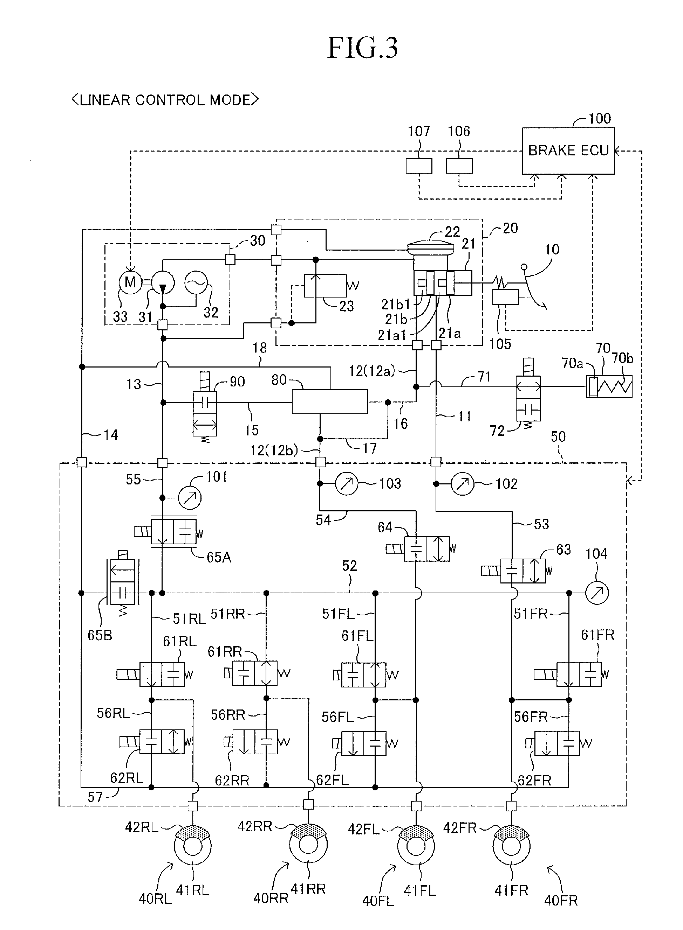

First, as illustrated in FIG. 3, in the linear control mode, the brake ECU 100 maintains each of the normally-open master cut valves 63 and 64 in the closed state by the current supply to the solenoids, and maintains the simulator cut valve 72 in the open state by the current supply to the solenoid. Moreover, in the linear control mode according to this embodiment, the brake ECU 100 maintains the normally-open pressure increasing mechanism cut valve 90 in the closed state by the current supply to the solenoid.

On the other hand, in the linear control mode, the brake ECU 100 controls current supply amounts (current values) to the solenoids of the pressure increasing linear control valve 65A and the pressure decreasing linear control valve 65B so that the pressure increasing linear control valve 65A and the pressure decreasing linear control valve 65B have opening degrees corresponding to the current supply amounts. Further, the brake ECU 100 maintains the normally-open holding valves 61 FL and 61 RR in the open state, and maintains the normally-closed holding valves 61 FR and 61 RL in the open state by current supply to the solenoids. Moreover, the brake ECU 100 maintains the normally-closed pressure decreasing valves 62FR, 62FL, and 62RR in the closed state, and maintains the pressure decreasing valve 62RL in the closed state by current supply to the solenoid. Although a detailed description is not given, for example, if the well-known anti-lock brake control based on the wheel speed Vx detected by the wheel speed sensor 106 is necessary to carry out, the brake ECU 100 controls the current supply to the respective solenoids of the holding valves 61 and the pressure decreasing valves 62 based on the anti-lock brake control, thereby bringing the holding valves 61 and the pressure decreasing valves 62 into the open state or the closed state.

The open state and the closed state of each of the valves constructing the hydraulic pressure control valve device 50 are controlled in this way. Thus, both the master cut valves 63 and 64 are maintained in the closed state in the linear control mode, and hence the master cylinder pressures Pmc_FR and Pmc_FL output from the master cylinder 21 are not transmitted to the wheel cylinders 42FR and 42FL. Moreover, the pressure increasing mechanism cut valve 90 is maintained in the closed state, and the accumulator pressure Pacc output from the pressurizing pump 31 or the accumulator 32 of the power hydraulic pressure generation device 30 is thus not transmitted to the pressure increasing mechanism 80. Thus, in the linear control mode, the high accumulator pressure Pacc is prevented from being transmitted from the high pressure chamber 85 of the pressure increasing mechanism 80 via the small diameter chamber 84, the communication passage 89, the large diameter chamber 83, the pilot passage 16, and the master pressure pipe 12 (12a) to the master cylinder 21.

On the other hand, the pressure increasing linear control valve 65A and the pressure decreasing linear control valve 65B are in the current supply control state of the solenoids, and hence the accumulator pressure Pacc output from the power hydraulic pressure generation device 30 is adjusted by the pressure increasing linear control valve 65A and the pressure decreasing linear control valve 65B, and is transmitted to the wheel cylinders 42 at the four wheels. In this case, the holding valves 61 are maintained in the open state, and the pressure decreasing valves 62 are maintained in the closed state, and hence the wheel cylinders 42 each communicate to the main flow passage 52, and all the wheel cylinder pressures have the same value at the four wheels. The wheel cylinder pressure can be detected by the control pressure sensor 104 as the control pressure Px.

By the way, the vehicle on which the brake device according to this embodiment is installed may be, for example, an electric vehicle (EV) including a running motor driven by a battery power supply, a hybrid vehicle (HV) including an internal combustion engine in addition to the running motor, and a plug-in hybrid vehicle (PHV) which is a hybrid vehicle (HV) further including a battery rechargeable by using an external power supply. Each of those vehicles can carry out regenerative braking in the following manner. Electric power is generated by converting rotational energy of the wheels into electric energy by the running motor, thereby generating electricity, and the battery is charged by using the generated electric power, thereby acquiring a braking force. If the regenerative braking is carried out, a braking force is generated by the brake device, which is acquired by subtracting a regenerative braking force amount from a total braking force required for braking the vehicle, thereby carrying out brake regeneration cooperative control by using both the regenerative braking and the hydraulic braking.

Specifically, the brake ECU 100 receives a braking request, and then starts the brake regeneration cooperative control. The braking request is generated when the braking force needs to be applied to the vehicle, for example, when the driver carries out the stepping operation (hereinafter also simply referred to as "brake operation") on the brake pedal 10, or when automatic braking is requested to be operated. In this case, the automatic braking may be operated in traction control, vehicle stability control, headway distance control, and collision prevention control, and if start conditions for those pieces of control are satisfied, the braking request is generated.

When the brake ECU 100 receives the braking request, the brake ECU 100 acquires at least one of the master cylinder pressure Pmc_FR detected by the master cylinder pressure sensor 102, the master cylinder pressure Pmc_FL detected by the master cylinder pressure sensor 103, or the stroke Sm detected by the stroke sensor 105 as the brake operation amount, and calculates a target braking force which increases along with an increase in the master cylinder pressure Pmc_FR, the master cylinder pressure Pmc_FL, and/or the stroke Sm. Regarding the brake operation amount, the present invention can also be carried out so that the target braking force is calculated based on a pedal stepping force acquired by providing a stepping force sensor for detecting the pedal stepping force on the brake pedal 10 in place of the acquisition of the master cylinder pressure Pmc_FR, the master cylinder pressure Pmc_FL, and/or the stroke Sm.

The brake ECU 100 transmits information representing the calculated target braking force to a hybrid ECU (not shown). The hybrid ECU calculates the braking force generated by the power regeneration among the target braking forces, and transmits information representing the regenerative braking force, which is a calculation result, to the brake ECU 100. As a result, the brake ECU 100 can calculate the target hydraulic pressure braking force, which is the braking force to be generated on the brake device, by subtracting the regenerative braking force from the target braking force. On this occasion, the regenerative braking force generated by the power regeneration carried out by the hybrid ECU is changed not only by a change in the rotational speed of the motor but also by the regenerative power control depending on a charged state (SOC: state of charge) of the battery. Thus, an appropriate target hydraulic pressure braking force can be calculated by subtracting the regenerative braking force from the target braking force.

Further, the brake ECU 100 calculates, based on the calculated target hydraulic pressure braking force, a target hydraulic pressure for each of the wheel cylinders 42 corresponding to the target hydraulic pressure braking force, and controls the drive currents for the pressure increasing linear control valve 65A and the pressure decreasing linear control valve 65B by feedback control so that the wheel cylinder pressure is equal to the target hydraulic pressure. In other words, the brake ECU 100 controls the current supply amounts (current values) for the solenoids of the pressure increasing linear control valve 65A and the pressure decreasing linear control valve 65B so that the control pressure Px (=wheel cylinder pressure) detected by the control pressure sensor 104 follows the target hydraulic pressure.

As a result, the working fluid is supplied from the power hydraulic pressure generation device 30 via the pressure increasing linear control valve 65A to the respective wheel cylinders 42, resulting in increase of the control pressure Px (=wheel cylinder pressure) to generate the braking forces on the wheels. Moreover, the working fluid is discharged from the wheel cylinders 42 via the pressure decreasing linear control valve 65B to the reservoir flow passage 57, resulting in decrease of the control pressure Px (=wheel cylinder pressure) to appropriately adjust the braking forces generated on the respective wheels.

Then, for example, when the braking operation by the driver is released, the current supply to the solenoids of all the electromagnetic valves constructing the hydraulic pressure control valve device 50 is shut off, and all the electromagnetic valves are returned to original positions illustrated in FIG. 1. All the electromagnetic valves are returned to the original positions in this way. Consequently, the hydraulic pressure (working fluid) in the brake cylinder 42FR for the front right wheel is returned via the master cut valve 63 in the open state and the master pressure pipe 11 to the master cylinder 21 and the reservoir 22. The hydraulic pressure (working fluid) in the brake cylinder 42FL for the front left wheel is returned via the master cut valve 64 in the open state, the communication passage 89 of the pressure increasing mechanism 80, the pilot passage 16, and the master pressure pipe 12 (master pressure pipe 12a) to the master cylinder 21 and the reservoir 22.

The hydraulic pressure (working fluid) in the brake cylinder 42RR for the rear right wheel is returned via the holding valve 61 RR in the open state, the main flow passage 52, the holding valve 61 FL in the open state, the master cut valve 64 in the open state, the communication passage 89 of the pressure increasing mechanism 80, the pilot passage 16, and the master pressure pipe 12 (master pressure pipe 12a) to the master cylinder 21 and the reservoir 22. The hydraulic pressure (working fluid) in the brake cylinder 42RL for the rear left wheel is returned via the pressure decreasing valve 62RL in the open state and the reservoir flow passage 57 to the reservoir 22.

On this occasion, for the brake cylinder 42RL, the holding valve 61 RL is constructed by a normally-closed electromagnetic on-off valve in order to prevent the working fluid in the master cylinder 21 and the pressure increasing mechanism 80 from being supplied when an abnormality occurs in a control system (electric system) described later. Therefore, when the brake operation is released, the brake cylinder 42RL is shut off from the main flow passage 52, and cannot return the working fluid via the pressure increasing mechanism 80 to the master cylinder 21. In contrast, the pressure decreasing valve 62RL is constructed by a normally-open electromagnetic on-off valve, and can return the working fluid in the brake cylinder 42RL via the pressure decreasing valve 62RL to the reservoir 22. Moreover, if the pressure decreasing valve is a normally-open electromagnetic on-off valve, a supply of a current to a solenoid needs to be continued in the linear control mode, and such a problem in that power consumption increases thus occurs. In this embodiment, however, the normally-open pressure decreasing valve is only the one pressure decreasing valve 62RL, and the power consumption is restrained from increasing.

Note that, the present invention does not always need to carry out brake regeneration cooperative control, and it should be understood that the present invention can be applied to a vehicle on which the regenerative braking force is not generated. In this case, the target hydraulic pressure may directly be calculated based on the brake operation amount. The target hydraulic pressure is set by using a map, a calculation equation, or the like so as to have a larger value as the brake operation amount increases.

A description is now given of an example of the backup mode. In the vehicle brake device, the brake ECU 100 is configured to carry out a predetermined initial check, and if, for example, an abnormality such as a switching control failure of the respective electromagnetic on-off valves and an operation abnormality of the brake ECU 100 itself in the control system (electric system), or a possibility of a leak of the working fluid is detected as a result of the initial check, the brake ECU 100 operates the vehicle brake device to generate braking forces on the wheels in the backup mode.

First, if an abnormality in the control system (electric system) is detected, the brake ECU 100 shuts off the current supply to all the electromagnetic valves, thereby returning all the electromagnetic valves to original positions illustrated in FIG. 1. As a result, the pressure increasing linear control valve 65A and the pressure decreasing linear control valve 65B are brought into the closed state by shutting off the current supplies to the solenoids, and the power hydraulic pressure generation device 30 is shut off via the main flow passage 52 from the respective wheel cylinders 42. Moreover, the pressure increasing mechanism cut valve 90 is brought into the open state, and the pressure increasing mechanism 80 thus communicates to the accumulator 32. Moreover, the holding valves 61 FR and 61 RL are brought into the closed state, and the holding valves 61 FL and 61 RR are brought into the open state. As a result, the brake cylinder 42FL for the front left wheel and the brake cylinder RR for the rear right wheel RR communicate via the main flow passage 52 to each other, and the brake cylinder 42FR for the front right wheel and the brake cylinder 42RL for the rear left wheel are shut off from the main flow passage 52.

When the driver carries out the stepping operation on the brake pedal 10 in this state, the working fluid in the pressurizing chambers 21a1 and 21 b1 of the master cylinder 21 is pressurized. As a result, the hydraulic pressure in the pressurizing chamber 21a1 (master cylinder pressure Pmc_FR) can be supplied via the master pressure pipe 11, the master pressure flow passage 53, and the master cut valve 63 in the open state to the brake cylinder 42FR for the front right wheel, thereby appropriately operating the brake unit 40FR.

On the other hand, the hydraulic pressure (master cylinder pressure Pmc_FL) in the pressurizing chamber 21 b1 is supplied via the master pressure pipe 12 (12a) and the pilot passage 16 to the pressure increasing mechanism 80, and the pressure increasing mechanism 80 starts operating. In other words, in the pressure increasing mechanism 80, the stepped piston 82 moves forward, the communication via the communication passage 89 between the small diameter chamber 84 and the large diameter chamber 83 is shut off by the valve opening member 88, and the hydraulic pressure in the small diameter chamber 84 increases. Moreover, the valve opening member 88 moves forward, and the high pressure supply valve 86 is brought into the open state, the high-pressure working fluid is supplied via the pressure increasing mechanism cut valve 90 in the open state from the accumulator 32 to the high pressure chamber 85, and the accumulator pressure Pacc is transmitted to the small diameter chamber 84.

As a result, the hydraulic pressure (servo pressure) in the small diameter chamber 84 becomes higher than the master cylinder pressure Pmc_FL, is supplied via the master pressure pipe 12 (12b), the master pressure flow passage 54, and the master cut valve 64 in the open state to the brake cylinder 42FL for the front left wheel, and is supplied via the holding valve 61 FL, the main flow passage 52, and the holding valve 61 RR to the brake cylinder 42RR for the rear right wheel. Thus, the servo pressure higher than the master cylinder pressure Pmc_FL is supplied to the brake cylinder 42FL for the front left wheel and the brake cylinder 42RR for the rear right wheel, resulting in appropriate operations of the brake units 40FL and 40RR.

Moreover, the pressurizing pump 31 of the power hydraulic pressure generation device 30 is in a stop state in this state, and the hydraulic pressure (accumulator pressure Pacc) of the accumulator 32 thus gradually decreases. Therefore, when the accumulator pressure Pacc decreases to be equal to or less than the hydraulic pressure in the high pressure chamber 85, the check valve provided on the high pressure supply passage 15 prevents the working fluid from flowing from the high pressure chamber 85 to the accumulator 32. Thus, the stepped piston 82 is prevented from moving forward, the hydraulic pressure in the small diameter chamber 84 does not increase any more, and the pressure increasing mechanism 80 cannot provide the boost function any more. Then, when the pedal stepping force by the driver on the brake pedal 10 increases the hydraulic pressure (master cylinder pressure Pmc_FL) in the pressurizing chamber 21 b1 of the master cylinder 21 to be more than the hydraulic pressure in the small diameter chamber 84, the master cylinder pressure Pmc_FL is supplied via the bypass passage 17, the master pressure pipe 12b, the master pressure flow passage 54, the master cut valve 64, the holding valve 61 FL, the main flow passage 52, and the holding valve 61 RR to the brake cylinder 42FL for the front left wheel and the brake cylinder 42RR for the rear right wheel.

On this occasion, the holding valve 61 RL is in the closed state, and the hydraulic pressure (servo pressure or the master cylinder pressure Pmc_FL) in the pressurizing chamber 22b1 is thus not supplied via the main flow passage 52 to the brake cylinder 42RL for the rear left wheel. This configuration is employed to prevent occurrence of the following problem. An amount of the working fluid which can be supplied from the one pressurizing chamber 22b1 of the master cylinder 21 is limited, and hence, if the number of the brake cylinders as supply destinations increases, the hydraulic pressure in the brake cylinder cannot be sufficiently increased. Therefore, in this embodiment, the servo pressure (or master cylinder pressure Pmc_FL) is supplied to the brake cylinders 42FL and 42RR for the two wheels (front left wheel and the rear right wheel) at positions diagonal to each other. As a result, the yaw (yaw moment) can be hardly generated, and the two brake units 40FL and 40RR can be appropriately operated. Note that, as described above, the hydraulic pressure (master cylinder pressure Pmc_FR) is supplied from the pressurizing chamber 21a1 of the master cylinder 21 via the master cut valve 63 in the open state to the brake cylinder 42FR for the front right wheel.

As described above, in this embodiment, the hydraulic pressure (master cylinder pressures Pmc_FR and Pmc_FL) of the master cylinder 21 or the hydraulic pressure (servo pressure) via the pressure increasing mechanism 80 is supplied to the brake cylinders 42FR, 42FL, and 42RR for the three wheels in an abnormal state of the control system (electric system), and the braking force for the entire vehicle can be increased compared with the case where the hydraulic pressure is supplied to the brake cylinders for the two wheels. Then, while the pressure increasing mechanism 80 is operating, the servo pressure approximately equal to the master cylinder pressure Pmc_FL and higher than the master cylinder pressure Pmc_FR is supplied to the brake cylinder 42FL for the front left wheel and the brake cylinder 42RR for the rear right wheel, and thus the yaw (yaw moment) can be less generated.

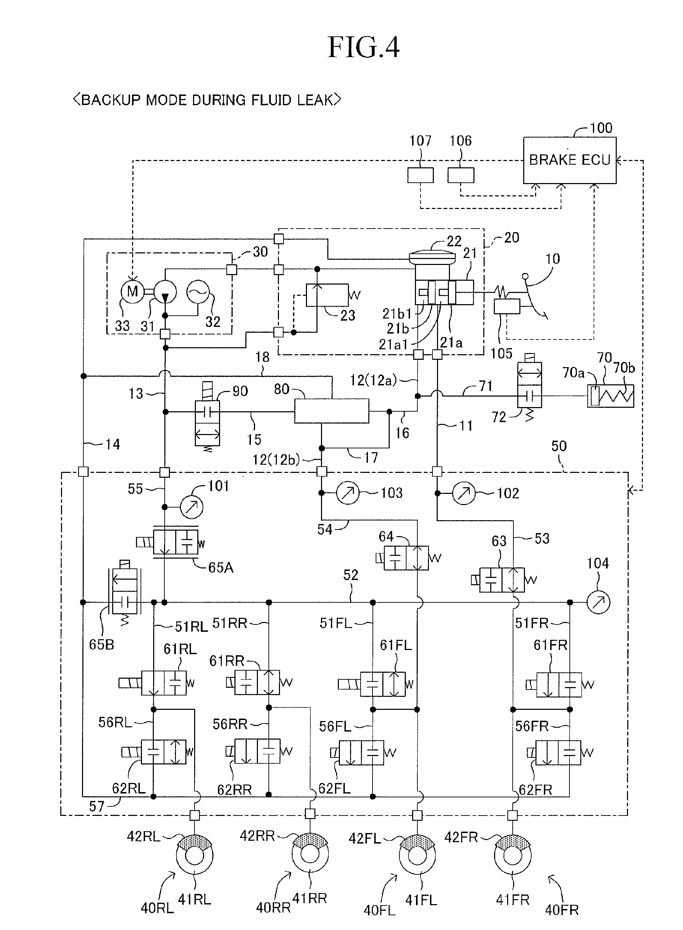

A description is now given of the backup mode when a possibility of the fluid leak is detected. When the brake ECU 100 detects a possibility of a fluid leak in the vehicle brake device, for example, based on a change (decrease) in the control pressure Px detected by the control pressure sensor 104, as illustrated in FIG. 4, the brake ECU 100 brings the holding valves 61 FR and 61 FL for the front right and left wheels into the closed state, brings the holding valves 61 RR and 61 RL for the rear right and left wheels into the open state, and brings the master cut valves 63 and 64 into the open state. Further, the brake ECU 100 brings the simulator cut valve 72 into the closed state, maintains the pressure increasing mechanism cut valve 90 in the closed state, and brings all the pressure decreasing valves 62 into the closed state.

As a result, the wheel cylinders 42RR and 42RL for the rear right and left wheels communicate via the holding valves 61 RR and 61 RL, the main flow passage 52, the pressure increasing linear control valve 65A, the accumulator pressure flow passage 55, and the accumulator pressure pipe 13 to the pressurizing pump 31 and/or the accumulator 32 of the power hydraulic pressure generation device 30. Therefore, the accumulator pressure Pacc is controlled by the pressure increasing linear control valve 65A so that the hydraulic pressure becomes the control pressure Px in the wheel cylinders 42RR and 42RL.

On the other hand, the wheel cylinder 42FR for the front right wheel communicates via the master cut valve 63, the master pressure flow passage 53, and the master pressure pipe 11 to the pressurizing chamber 21a1 of the master cylinder 21, and the hydraulic pressure thereof becomes the master cylinder pressure Pmc_FR. Moreover, the wheel cylinder 42FL for the front left wheel communicates via the master cut valve 64, the master pressure flow passage 54, the master pressure pipe 12b, the pressure increasing mechanism 80, the pilot passage 16, and the master pressure pipe 12a to the pressurizing chamber 21 b1 of the master cylinder 21, and the hydraulic pressure thereof becomes the servo pressure higher than the master cylinder pressure Pmc_FL in response to the operation of the pressure increasing mechanism 80.

In this way, when a possibility of the fluid leak in the vehicle brake device is detected, the holding valves 61 FR and 61 FL for the front right and left wheels are brought into the closed state (shutoff state). As a result, the communication via the main flow passage 52 between the wheel cylinder 42FR and the wheel cylinder 42FL for the front right and left wheels is shut off, and the communication via the main flow passage 52 between the wheel cylinders 42FR and 42FL for the front right and left wheels, and the wheel cylinders 42RR and 42RL for the rear right and left wheels is shut off. In other words, if the possibility of the fluid leak in the vehicle brake device is detected, the wheel cylinders 42 for the front wheels and the rear wheels are shut off from each other, the wheel cylinders 42 for the front left wheel and the front right wheel are shut off from each other on the front wheel side, and thus the three brake systems for the front right wheel, the front left wheel, and the rear right and left wheels are isolated from one another. As a result, even if a fluid leak occurs in one of those three brake systems, the other brake systems are not affected.

A specific description is now given of this configuration assuming a case where a fluid leak occurs from the wheel cylinder 42FL to the outside, or an abnormality occurs in the sealing performance of the pressure decreasing valve 62FL in the brake unit 40FL for the front left wheel. In this case, the brake ECU 100 can detect a possibility of the fluid leak occurring in the vehicle brake device based on, for example, a decrease in the accumulator pressure Pacc detected by the accumulator pressure sensor 101 or a decrease in the control pressure Px detected by the control pressure sensor 104 in the linear control mode, but the brake ECU 100 cannot identify a location at which the fluid leak occurs. However, as described above, the three brake systems for the front right wheel, the front left wheel, and the rear right and left wheels are isolated from one another. In this manner, even if a fluid leak occurs from the wheel cylinder 42FL for the front left wheel to the outside, or an abnormality occurs in the sealing performance of the pressure decreasing valve 62FL, the master cylinder pressure Pmc_FR can be supplied to the other wheel, namely, the front right wheel, thereby generating an appropriate braking force. The control pressure Px acquired by controlling (adjusting) the accumulator pressure Pacc can be supplied to the rear right and left wheels, thereby generating appropriate braking forces.

Moreover, when a possibility of a fluid leak in the brake device as described above is detected, the brake ECU 100 maintains the pressure increasing mechanism cut valve 90 in the closed state. As a result, the communication (connection) via the high pressure supply passage 15 between the accumulator 32 of the power hydraulic pressure generation device 30 and the high pressure chamber 85 of the pressure increasing mechanism 80 is shut off, and the transmission of the hydraulic pressure, namely, the communication of the working fluid from the accumulator 32 to the pressure increasing mechanism 80 is inhibited. Thus, even if a fluid leak occurs from the wheel cylinder 42FL for the front left wheel to the outside or an abnormality occurs in sealing performance of the pressure decreasing valve 62FL, the communication of the working fluid from the accumulator 32 via the pressure increasing mechanism 80 does not occur. As a result, for example, the communication of the working fluid from the high pressure chamber 85 of the pressure increasing mechanism 80 to the small diameter chamber 84 side, namely, the consumption of the accumulator pressure Pacc accumulated in the accumulator 32 by the pressure increasing mechanism 80 can be surely prevented, and the accumulator pressure Pacc can thus be supplied via the pressure increasing linear control valve 65A to the wheel cylinders 42RR and 42RL for the rear right and left wheels in the concentrated manner. In other words, the pressure increasing mechanism cut valve 90 is maintained in the closed state, the control pressure Px acquired by controlling (adjusting) the accumulator pressure Pacc can thus be supplied to the rear right and left wheels without wastefully decreasing the accumulator pressure Pacc of the accumulator 32, and the appropriate braking forces can be generated.

As understood from the description above, according to the first embodiment, the brake ECU 100 maintains the pressure increasing mechanism cut valve 90 in the closed state, and the transmission of the accumulator pressure Pacc, specifically, the communication of the working fluid from the pressurizing pump 31 or the accumulator 32 of the power hydraulic pressure generation device 30 to the pressure increasing mechanism 80 can thus surely be shut off. Thus, even if a fluid leak or the like occurs in the pressure increasing mechanism 80, the high-pressure working fluid (hydraulic pressure) can be prevented from flowing backward from the pressurizing pump 31 or the accumulator 32 of the power hydraulic pressure generation device 30 via the pressure increasing mechanism 80 to the master cylinder 21. In addition, even if a fluid leak or the like occurs in the brake system connected to the pressure increasing mechanism 80, the accumulator pressure Pacc accumulated in the accumulator 32 can be prevented from wastefully being decreased (consumed).

### a-1. Modified Example of First Embodiment

In the first embodiment, the current is always supplied to the solenoid of the normally-open pressure increasing mechanism cut valve 90 so as to be maintained in the closed state in the linear control mode, in other words, during the normal control of the vehicle brake device. As a result, for example, when a sealing performance abnormality occurs in the high pressure supply valve 86 and the valve seat 87 of the pressure increasing mechanism 80, the working fluid (accumulator pressure Pacc) in the high pressure chamber 85 is surely prevented from flowing backward via the small diameter chamber 84, the communication passage 89, and the large diameter chamber 83 to the master cylinder 21, and when a sealing performance abnormality occurs in the stepped piston 82 and the valve opening member 88, the working fluid at the high pressure (servo pressure) in the small diameter chamber 84 is surely prevented from flowing backward via the communication passage 89 and the large diameter chamber 83 to the master cylinder 21. Moreover, when the current is supplied to the solenoid of the pressure increasing mechanism cut valve 90, thereby maintaining the closed state, even if a fluid leak to the outside occurs in the brake system communicating to the pressure increasing mechanism 80, for example, in the brake system for the front left wheel according to the first embodiment, or a fluid leak occurs in the pressure decreasing valves 62, the communication of the working fluid (transmission of hydraulic pressure) from the accumulator 32 can be inhibited, and the consumption of the accumulator pressure Pacc in the accumulator 32 by the pressure increasing mechanism 80 can surely be prevented.

By the way, in this case, the current needs to continuously be supplied to the solenoid in order to maintain the pressure increasing mechanism cut valve 90 in the closed state. On the other hand, it is desired to restrain the electric energy consumed by the pressure increasing mechanism cut valve 90 from increasing (in other words, to restrain the fuel consumption or the electricity consumption of the vehicle from degrading), and to reduce the heat generated in the pressure increasing mechanism cut valve 90. Thus, according to this modified example, only if a possibility of a fluid leak or the like in the pressure increasing mechanism 80 or the brake system communicating to the pressure increasing mechanism 80 is detected, the brake ECU 100 maintains the pressure increasing mechanism cut valve 90 in the closed state. A detailed description is now given of the modified example of the first embodiment. Like components as those of the first embodiment are denoted by like symbols, and detailed description thereof is omitted herein.

The brake ECU 100 carries out the brake control in the linear control mode in this modified example as in the first embodiment. However, the brake ECU 100 maintains the pressure increasing mechanism cut valve 90 in the open state without supplying the solenoid with a current in the normal state (ordinary state) in this modified example, which is different from the first embodiment.

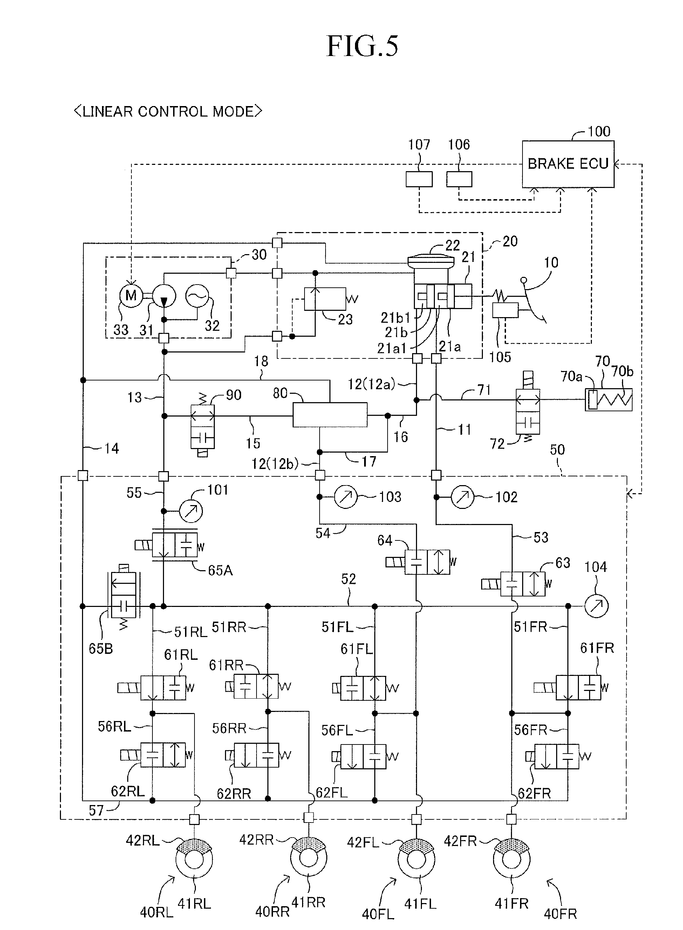

In other words, also in the linear control mode according to this modified example, as illustrated in FIG. 5, in the normal state, the brake ECU 100 maintains the normally-open master cut valves 63 and 64 in the closed state by the current supply to the solenoids, and maintains the simulator cut valve 72 in the open state by the current supply to the solenoid. Moreover, the brake ECU 100 controls current supply amounts (current values) to the solenoids of the pressure increasing linear control valve 65A and the pressure decreasing linear control valve 65B to control the pressure increasing linear control valve 65A and the pressure decreasing linear control valve 65B to attain opening degrees corresponding to the current supply amounts. Further, the brake ECU 100 maintains the holding valves 61 in the open state, and maintains the pressure decreasing valves 62 in the closed state. On the other hand, in this modified example, the brake ECU 100 maintains the normally-open pressure increasing mechanism cut valve 90 in the open state without supplying the solenoid with a current except for states described below.

The open state or the closed state of the respective valves constructing the hydraulic pressure control valve device 50 is controlled in this way. As a result, in the linear control mode according to this modified example, the pressure increasing mechanism cut valve 90 is in the open state, and thus the accumulator pressure Pacc output from the pressurizing pump 31 or the accumulator 32 of the power hydraulic pressure generation device 30 is also supplied to the pressure increasing mechanism 80. As a result, in the normal state, the master cylinder pressure Pmc_FR output from the pressurizing chamber 21a1 of the master cylinder 21 is output to the master pressure pipe 11, and the master cylinder pressure Pmc_FL output from the pressurizing chamber 21 b1 of the master cylinder 21 is output to the master pressure pipe 12b as the servo pressure increased by the pressure increasing mechanism 80. However, the master cut valves 63 and 64 are both maintained in the closed state, and hence the master cylinder pressures Pmc_FR and Pmc_FL are not transmitted to the wheel cylinders 42FR and 42FL.

As a result, in the normal state in the linear control mode, the pressure increasing linear control valve 65A and the pressure decreasing linear control valve 65B are in the solenoid current supply control state as in the first embodiment. Therefore, the accumulator pressure Pacc output from the power hydraulic pressure generation device 30 is adjusted by the pressure increasing linear control valve 65A and the pressure decreasing linear control valve 65B, and the adjusted accumulator pressure is transmitted to the wheel cylinders 42 at the four wheels. Also in this case, the holding valves 61 are maintained in the open state, and the pressure decreasing valves 62 are maintained in the closed state. Therefore, the wheel cylinder pressures in the respective wheel cylinders 42 are the same value on all the four wheels, and are detected by the control pressure sensor 104 as the control pressure Px.

In the normal state in the linear control mode as described above, when occurrence of a fluid leak or the like is suspected in the pressure increasing mechanism 80, the brake ECU 100 supplies the solenoid of the pressure increasing mechanism cut valve 90 with a current, thereby bringing the cut valve 90 into the closed state as in the first embodiment. Specifically, as described above, when, for example, an abnormality occurs in sealing performance between the high pressure supply valve 86 and the valve seat 87 in the pressure increasing mechanism 80 operating in the normal state in the linear control mode, if the pressure increasing mechanism cut valve 90 is in the open state, and the brake operation is not carried out, the working fluid which has flown from the high pressure chamber 85, which communicates via the high pressure supply passage 15 to the accumulator 32, to the small diameter chamber 84 may flow backward via the communication passage 89, the large diameter chamber 83, the pilot passage 16, the master pressure pipe 12a, and the pressurizing chamber 21 b1 of the master cylinder 21, to the reservoir 22. In other words, in this case, a state where the accumulator pressure Pacc accumulated in the accumulator 32 of the power hydraulic pressure generation device 30 is consumed in vain (accumulator pressure Pacc frequently decreases to be equal to or lower than the set pressure range) occurs.

Alternatively, as described above, for example, if an abnormality occurs in the sealing performance between the stepped piston 82 and the valve opening member 88 in the pressure increasing mechanism 80 operating in the normal state in the linear control mode, under a state where the pressure increasing mechanism cut valve 90 is in the open state, and the brake operation is carried out, the working fluid (servo pressure) pressurized in the small diameter chamber 84 may flow backward via the communication passage 89, the large diameter chamber 83, the pilot passage 16, and the master pressure pipe 12a to the pressurizing chamber 21 b1 of the master cylinder 21. In other words, in this case, there occurs such a state that the accumulator pressure Pacc accumulated in the accumulator 32 of the power hydraulic pressure generation device 30 is consumed, and the master cylinder pressure Pmc_FL generated in the pressurizing chamber 21 b1 changes with respect to the pedal stroke Sm of the brake pedal 10 operated by the driver.

Therefore, for example, if there occurs such a state that a frequency of driving the pressurizing pump 31 (motor 33) to maintain the accumulator pressure Pacc detected by the accumulator pressure sensor 101 in the set pressure range or such a state that a relationship held between the master cylinder pressures Pmc_FR and Pmc_FL detected by the master cylinder pressure sensors 102 and 103 when the driver carries out the brake operation and the pedal stroke Sm detected by the stroke sensor 105 changes, the brake ECU 100 determines that a fluid leak or the like may occur with high possibility in the pressure increasing mechanism 80. Then, if the state described above occurs, the brake ECU 100 supplies the solenoid of the pressure increasing mechanism cut valve 90 with a current, thereby bringing the cut valve 90 into the closed state.

As a result, as in the first embodiment, the accumulator pressure Pacc output from the pressurizing pump 31 or the accumulator 32 of the power hydraulic pressure generation device 30 is thus not transmitted to the pressure increasing mechanism 80. Thus, also in the linear control mode according to this modified example, in such a state that a fluid leak or the like may occur in the pressure increasing mechanism 80, the high accumulator pressure Pacc is surely prevented from being transmitted from the high pressure chamber 85 of the pressure increasing mechanism 80 via the small diameter chamber 84, the communication passage 89, the large diameter chamber 83, the pilot passage 16, and the master pressure pipe 12 (12a) to the master cylinder 21 or the reservoir 22.

Moreover, if a possibility of the fluid leak in the brake system of the brake device is detected in this modified example of the first embodiment, the brake ECU 100 brings the holding valves 61 FR and 61 FL for the front right and left wheels into the closed state, brings the holding valves 61 RR and 61 RL for the rear right and left wheels into the open state, and brings the master cut valves 63 and 64 into the open state in response to the backup mode in FIG. 4 described in the first embodiment. Then, the brake ECU 100 brings the simulator cut valve 72 into the closed state, maintains the pressure increasing mechanism cut valve 90 in the closed state, and brings all the pressure decreasing valves 62 into the closed state.

As a result, also in this modified example, as in the first embodiment, when a possibility of a fluid leak in the brake system of the vehicle brake device is detected, the holding valves 61 FR and 61 FL for the front right and left wheels are brought into the closed state (shutoff state). Therefore, the communication between the wheel cylinders 42FR and 42FL for the front right and left wheels is shut off, and the communication between the wheel cylinders 42FR and 42FL for the front right and left wheels and the wheel cylinders 42RR and 42RL for the rear right and left wheels is shut off. In other words, also in this modified example, when a possibility of a fluid leak in the vehicle brake device is detected, the three brake systems for the front right wheel, the front left wheel, and the rear right and left wheels are isolated from one another. Thus, even if a fluid leak occurs in one of those three brake systems, the other brake systems are not affected.

Moreover, also in this modified example, when a possibility of a fluid leak in a brake system of the brake device is detected, the brake ECU 100 maintains the pressure increasing mechanism cut valve 90 in the closed state. As a result, the communication via the high pressure supply passage 16 between the accumulator 32 of the power hydraulic pressure generation device 30 and the high pressure chamber 85 of the pressure increasing mechanism 80 is shut off, and the communication of the working fluid from the accumulator 32 to the pressure increasing mechanism 80 is thus inhibited. Thus, the accumulator pressure Pacc accumulated in the accumulator 32 is surely prevented from being consumed by the pressure increasing mechanism 80, and the accumulator pressure Pacc can thus be supplied via the pressure increasing linear control valve 65A to the wheel cylinders 42RR and 42RL for the rear right and left wheels in the concentrated manner. In other words, also in this modified example, the pressure increasing mechanism cut valve 90 is maintained in the closed state. The control pressure Px acquired by controlling (adjusting) the accumulator pressure Pacc can thus be supplied to the rear right and left wheels without decreasing the accumulator pressure Pacc of the accumulator 32, and the appropriate braking forces can be generated.

As understood from the description above, in the linear control mode according to this modified example, only when a possibility of a leak or the like in the pressure increasing mechanism 80, or a possibility of a leak or the like in the brake system of the brake device is detected, a current can be supplied to the solenoid of the pressure increasing mechanism cut valve 90, thereby maintaining the cut valve 90 in the closed state. Thus, according to this modified example, the electric energy consumed to maintain the pressure increasing mechanism cut valve 90 in the closed state can be significantly decreased, and the heat generated by the power consumption can be significantly decreased. As a result, the fuel efficiency (electricity efficiency) can be increased, and design and setting of a heat radiation member for radiating the generated heat is no longer necessary, resulting in a cost reduction. As other effects, the effects as in the first embodiment are expected.

### b. Second Embodiment

In the first embodiment and the modified example, in the state where the working fluid flows backward via the pressure increasing mechanism 80 to the master cylinder 21 or in the state where a leak or the like of the working fluid may occur in the brake systems communicating to the pressure increasing mechanism 80, the pressure increasing mechanism cut valve 90 is maintained in the closed state, thereby preventing the backward flow of the working fluid and the decrease in (consumption of) the accumulator pressure Pacc accumulated in the accumulator 32 of the power hydraulic pressure generation device 30. In this case, an appropriate sealing performance maintained in the pressure increasing mechanism 80 and the brake systems communicating to the pressure increasing mechanism 80 may restrain occurrence of the states described above. A description is now given of a second embodiment of the present invention. Like components as those of the first embodiment are denoted by like symbols, and description thereof is omitted herein.

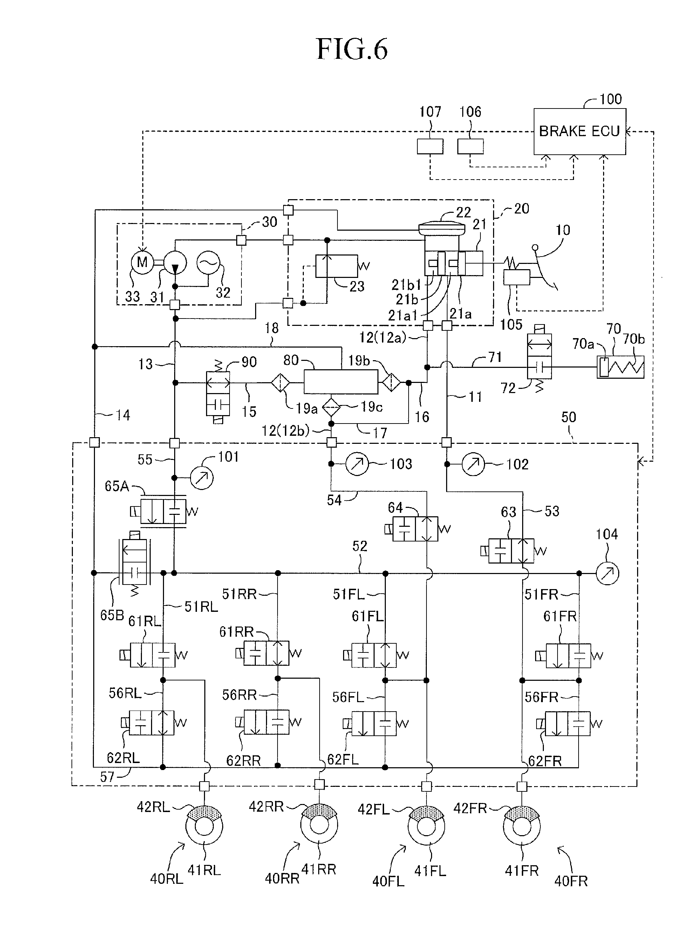

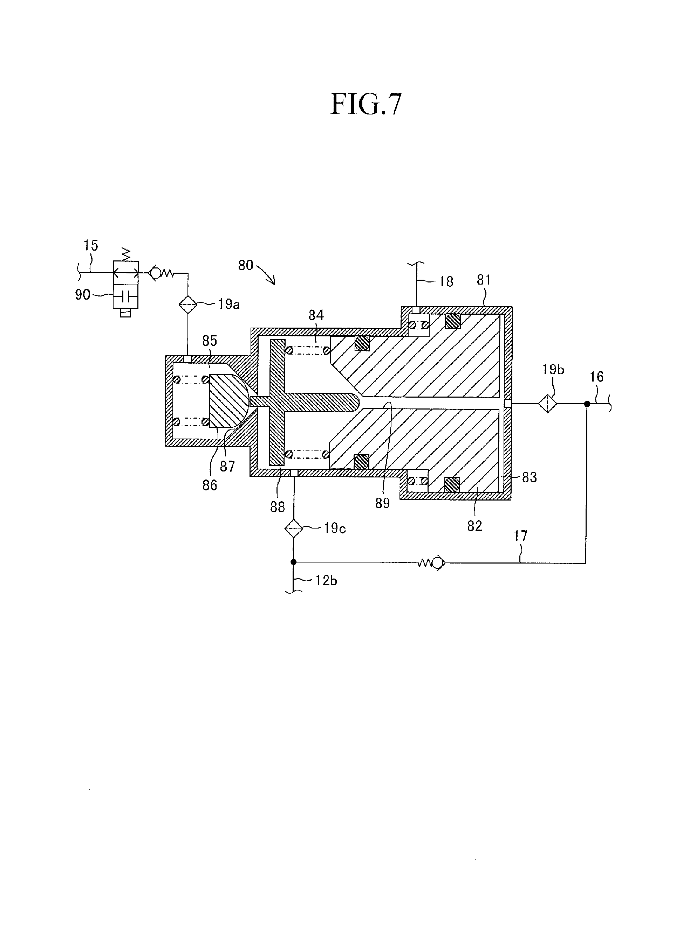

According to the second embodiment, as illustrated in FIGS. 6 and 7, filters 19a and 19b are provided in the high pressure supply passage 15 and the pilot passage 16, which are input-side passages connected to the pressure increasing mechanism 80, and a filter 19c is provided in the master pressure pipe 12b which is an output-side pipe (passage) connected to the pressure increasing mechanism 80. The filters 19a, 19b, and 19c respectively have functions of filtering the working fluid flowing respectively through the high pressure supply passage 15, the pilot passage 16, and the master pressure pipe 12b.

As a result, as illustrated in FIG. 7, foreign matters affecting, for example, the sealing performance between the high pressure supply valve 86 and the valve seat 87 of the pressure increasing mechanism 80 are removed from the working fluid supplied (input) from the pressurizing pump 31 or the accumulator 32 of the power hydraulic pressure generation device 30 via the high pressure supply passage 15 to the pressure increasing mechanism 80 by the filtering function of the filter 19a, and then the working fluid is supplied to the high pressure chamber 85. Moreover, as illustrated in FIG. 7, foreign matters affecting, for example, the sealing performance between the high pressure supply valve 86 and the valve seat 87 and the sealing performance between the stepped piston 82 and the valve opening member 88 of the pressure increasing mechanism 80 are removed from the working fluid supplied (input) from the pressurizing chamber 21 b1 of the master cylinder 21 via the master pressure pipe 12a and the pilot passage 16 to the pressure increasing mechanism 80 by the filtering function of the filter 19b, and then the working fluid is supplied to the large diameter chamber 83. Further, as illustrated in FIG. 7, foreign matters affecting, for example, the opening/closing operations (sealing performance) of the master cut valve 64, the holding valve 61 FL, and the pressure decreasing valve 62FL are removed from the working fluid supplied (input) from the pressure increasing mechanism 80 via the master pressure pipe 12b to the master pressure flow passage 54 of the hydraulic pressure control valve device 50 by the filtering function of the filter 19c.

The working fluid output from the pressure increasing mechanism 80 to the master pressure flow passage 54 of the hydraulic pressure control valve device 50, namely, the working fluid filtered by the filters 19a, 19b, and 19c is returned to the reservoir 22 when the brake operation is released. As a result, the working fluid reserved in the reservoir 22, for example, passes through the filters 19b and 19c when returning to the reservoir 22, and thus the foreign matters affecting the sealing performance are appropriately removed. Thus, the foreign matters affecting the opening/closing operation (sealing performance) of the linear control valves 65, the holding valves 61, and the pressure decreasing valves 62 are removed from the working fluid supplied from the reservoir 22 via the power hydraulic pressure generation device 30 and the accumulator pressure pipe 13 to the wheel cylinders 42 for the front and rear right and left wheels.

Then, also in the second embodiment, the brake ECU 100 maintains the pressure increasing mechanism cut valve 90 in the closed state or the open state, and selectively carries out the brake control in the linear control mode or the backup mode as in the first embodiment and the modified example. In this case, if the brake ECU 100 maintains the pressure increasing mechanism cut valve 90 in the open state, and carries out the brake control in the linear control mode particularly in the same way as the modified example of the first embodiment, the filters 19a, 19b, and 19c respectively provided on the high pressure supply passage 15, the pilot passage 16, and the master pressure pipe 12b appropriately remove the foreign matters affecting the sealing performance, and thus, for example, the frequency of switching the pressure increasing mechanism cut valve 90 to the closed state can be reduced.

As a result, according to the second embodiment, for example, a fluid leak or the like can be effectively prevented from occurring in the pressure increasing mechanism 80 and the brake systems communicating to the pressure increasing mechanism 80, and, as a result, the frequency and a time period of maintaining the pressure increasing mechanism cut valve 90 in the closed state can be significantly decreased. Thus, according to the second embodiment, the electric energy consumed to maintain the pressure increasing mechanism cut valve 90 in the closed state can be significantly decreased, and the heat generated by the power consumption can be significantly decreased. As a result, the fuel efficiency (electricity efficiency) can be increased, and design and setting of a heat radiation member for radiating the generated heat is no longer necessary, resulting in a cost reduction.

Moreover, according to the second embodiment, for example, a frequency of switching (changing) the pressure increasing mechanism cut valve 90 from the open state to the closed state can be significantly reduced, and thus an operation sound and a vibration caused by the switching (changing) can be significantly reduced. As a result, discomfort to be felt by occupants on the vehicle can be effectively prevented, resulting in an increase in marketability of the vehicle. It should be understood that, also in the second embodiment, the pressure increasing mechanism cut valve 90 can be maintained in the closed state as in the first embodiment, or the pressure increasing mechanism cut valve 90 can be changed to the closed state as in the modified example of the first embodiment.

### b-1. Modified Example of Second Embodiment

The filters 19a, 19b, and 19c are respectively provided on the high pressure supply passage 15, the pilot passage 16, and the master pressure pipe 12b according to the second embodiment. In this case, the pressure increasing mechanism 80 has such a structure that the pilot passage 16 and the master pressure pipe 12b communicate via the communication passage 89 to each other, and such a modified example that the filter 19b is provided only on the pilot passage 16, in other words, such a modified example that the filter 19a provided on the high pressure supply passage 15 and the filter 19c provided on the master pressure pipe 12b are omitted may be provided. In the modified example of the second embodiment, the filter 19b is provided only on the pilot passage 16, but, as described above, the filter 19b can remove the foreign matters affecting the sealing performance between the high pressure supply valve 86 and the valve seat 87 of the pressure increasing mechanism 80 and the sealing performance between the stepped piston 82 and the valve opening member 88, thereby supplying the large diameter chamber 83 with the working fluid. Thus, the same effects as those in the second embodiment can be expected also in the modified example of the second embodiment.

In carrying out the present invention, the present invention is not limited to the above-mentioned embodiments and modified examples, and different kinds of changes can be made thereto without departing from an object of the present invention.

For example, the brake device in which the power hydraulic pressure generation device 30 and the pressure increasing mechanism 80 are connected via the hydraulic pressure control valve mechanism 50 to the respective wheel cylinders 42 is used in the respective embodiments and the respective modified examples. In other words, in the respective embodiments and the respective modified examples, the accumulator pressure Pacc of the accumulator 32 of the power hydraulic pressure generation device 30 is adjusted by the linear control valves 65 and is then transmitted to the respective wheel cylinders 42, or the servo pressure output from the pressure increasing mechanism 80 is directly transmitted to the wheel cylinder 42FL.

In this case, a brake device having the following configuration may be used. The power hydraulic pressure generation device 30 and the pressure increasing mechanism 80 are not connected via the hydraulic pressure control valve mechanism 50 to the wheel cylinders 42, but the servo pressure is transmitted from the pressure increasing mechanism 80 connected to the power hydraulic pressure generation device 30 to the master cylinder 21. In this case, specifically, a hydro booster is provided for the master cylinder 21, and the servo pressure is supplied to the hydro booster from the pressure increasing mechanism 80. As a result, the master cylinder 21 can generate the master cylinder pressures Pmc_FR and Pmc_FL including the added servo pressure, and can transmit the generated hydraulic pressures to, for example, the wheel cylinders 42 including the wheel cylinder 42FL. Thus, the same effects as those in the respective embodiments and modified examples can be expected.

If the servo pressure is transmitted to the master cylinder 21 from the pressure increasing mechanism 80, and the master cylinder 21 generates the master cylinder pressures Pmc_FR and Pmc_FL including the added servo pressure in this way, the hydraulic pressure supplied from the power hydraulic pressure generation device 30 and the hydraulic pressure supplied from the pressure increasing mechanism 80 do not need to be selectively switched as the hydraulic pressure transmitted by the hydraulic pressure control valve mechanism 50 to the respective wheel cylinders 42. Moreover, in this case, the hydraulic pressure control valve mechanism 50 does not need to include the linear control valves 65. Thus, the hydraulic pressure control valve mechanism 50 switches and operates the holding valves 61 and the pressure decreasing valves 62 so that the hydraulic pressure (control pressure Px) at the respective wheel cylinders 42 is appropriate in this case.

Further, when the initial check is carried out in the respective embodiments and modified examples, operation sounds caused by the switching operations of the respective electromagnetic on-off valves may be generated. Therefore, for example, if the vehicle is an HV or a PHV, the initial check may be carried out when the number of revolutions of an internal combustion engine is equal to or more than a predetermined number of revolutions, or if the vehicle is an EV, the initial check may be carried out when a sound volume of an audio device is equal to or more than a predetermined sound volume. As a result, the operation sounds generated during the initial check can be mixed with a sound generated by the internal combustion engine or may be mixed with a sound generated from the audio device, and the operation sounds may be less sensed by the occupants.

## Claims

1. A vehicle brake device, comprising:
a master cylinder for generating a hydraulic pressure of a working fluid in response to an operation by a driver on a brake pedal;
a power hydraulic pressure source for generating a hydraulic pressure by drive of a pressurizing pump;
a pressure increasing mechanism connected to the master cylinder and the power hydraulic pressure source, the pressure increasing mechanism being configured to use the hydraulic pressure from the power hydraulic pressure source to generate a hydraulic pressure having a predetermined ratio with respect to the hydraulic pressure by the master cylinder; and
a shut-off valve that is a normally-open electromagnetic on-off valve provided on a passage for connecting the power hydraulic pressure source and the pressure increasing mechanism to each other, the shut-off valve being configured to be switched from an open state for permitting transmission of the hydraulic pressure from the power hydraulic pressure source to the pressure increasing mechanism to a closed state for inhibiting the transmission of the hydraulic pressure from the power hydraulic pressure source to the pressure increasing mechanism.

2. A vehicle brake device according to claim 1, wherein the shut-off valve is switched to the closed state at least in an abnormal state in which there is a possibility of occurrence of a leak of the working fluid in the pressure increasing mechanism.

3. A vehicle brake device according to claim 1 or 2, wherein the shut-off valve is switched to the closed state in a normal state in which no leak of the working fluid occurs in the pressure increasing mechanism.

4. A vehicle brake device according to any one of claims 1 to 3, further comprising:
a valve mechanism for selectively switching between the hydraulic pressure output from the power hydraulic pressure source and the hydraulic pressure output from the pressure increasing mechanism so as to transmit the selected hydraulic pressure to a wheel cylinder for applying a braking force to a wheel; and
control means for controlling an operation of the valve mechanism.

5. A vehicle brake device according to claim 4, wherein the control means is configured to:
switch the shut-off valve to the open state in a normal state in which the valve mechanism is controlled so that the hydraulic pressure from the power hydraulic pressure source is selected and is transmitted to the wheel cylinder; and
switch the shut-off valve to the closed state in an abnormal state in which there is a possibility of occurrence of a leak of the working fluid in the pressure increasing mechanism.

6. A vehicle brake device according to claim 4 or 5, wherein the control means is configured to:
switch the shut-off valve to the open state in a normal state in which the valve mechanism is controlled so that the hydraulic pressure from the power hydraulic pressure source is selected and is transmitted to the wheel cylinder; and
switch the shut-off valve to the closed state in an abnormal state in which there is a possibility of occurrence of a leak of the working fluid in any one of a brake system between the power hydraulic pressure source and the wheel cylinder and a brake system between the pressure increasing mechanism and the wheel cylinder.

7. A vehicle brake device according to any one of claims 4 to 6, wherein the control means is configured to switch the shut-off valve to the closed state in a normal state in which the valve mechanism is controlled so that the hydraulic pressure from the power hydraulic pressure source is selected and is transmitted to the wheel cylinder.

8. A vehicle brake device according to any one of claims 1 to 7, further comprising a filter for filtering at least the working fluid flowing from the master cylinder into the pressure increasing mechanism, the filter being provided on a passage for connecting the master cylinder and the pressure increasing mechanism to each other.

9. A vehicle brake device according to claim 8, further comprising at least one of a filter provided on the passage for connecting the power hydraulic pressure source and the pressure increasing mechanism to each other, for filtering at least the working fluid flowing from the power hydraulic pressure source into the pressure increasing mechanism, or a filter provided on an output passage from the pressure increasing mechanism, for filtering at least the working fluid flowing out from the pressure increasing mechanism.

10. A vehicle brake device according to any one of claims 4 to 9, wherein:
the valve mechanism comprises a linear control valve for adjusting the hydraulic pressure transmitted from the power hydraulic pressure source to the wheel cylinder, and a plurality of electromagnetic on-off valves for realizing connection or shutoff between the linear control valve and the wheel cylinder and connection or shutoff between the pressure increasing mechanism and the wheel cylinder; and
the control means is configured to:
control drive of the plurality of electromagnetic on-off valves so as to connect the power hydraulic pressure source and the wheel cylinder to each other via the linear control valve, and so as to shut off the connection between the pressure increasing mechanism and the wheel cylinder when operations of respective valves constructing the valve mechanism are normal;
control the drive of the plurality of electromagnetic on-off valves so as to shut off the connection between the power hydraulic pressure source and the wheel cylinder via the linear control valve, and so as to connect the pressure increasing mechanism and the wheel cylinder to each other when an abnormality occurs in the operations of the respective valves constructing the valve mechanism; and
further switch the shut-off valve to the open state.

11. A vehicle brake device according to claim 10, wherein, when the abnormality occurs in the operations of the respective valves constructing the valve mechanism, the connection between the power hydraulic pressure source and the wheel cylinder via the linear control valve is shut off, and the pressure increasing mechanism and the wheel cylinder provided for each of two wheels located at front and rear positions diagonal to each other out of respective front and rear right and left wheels of a vehicle are connected to each other.

12. A vehicle brake device according to claim 10 or 11, wherein the control means is configured to, in an abnormal state in which there is a possibility of occurrence of a leak of the working fluid in any one of brake systems between the power hydraulic pressure source and respective wheel cylinders provided for respective front and rear right and left wheels of a vehicle:
control the drive of the plurality of electromagnetic on-off valves of the valve mechanism so as to maintain the connection between the power hydraulic pressure source and the respective wheel cylinders provided on a rear right and left wheel side of the vehicle, shut off the connection between the power hydraulic pressure source and the respective wheel cylinders provided on a front right and left wheel side of the vehicle, and connect at least the pressure increasing mechanism and the wheel cylinder provided on one side of the front right and left wheel side of the vehicle to each other; and
maintain the shut-off valve in the closed state.

13. A vehicle brake device according to claim 12, wherein:
the master cylinder generates the hydraulic pressure in response to the operation by the driver on the brake pedal, and outputs the hydraulic pressure via a plurality of systems;
the valve mechanism comprises an electromagnetic on-off valve for realizing connection or shutoff between one of the plurality of systems of the master cylinder and the wheel cylinder provided on another side of the front right and left wheel side of the vehicle; and
the control means is configured to, in the abnormal state in which there is a possibility of occurrence of a leak of the working fluid in any one of the brake systems between the power hydraulic pressure source and the respective wheel cylinders provided for the respective front and rear right and left wheels of the vehicle, control the drive of the plurality of electromagnetic on-off valves of the valve mechanism so as to connect the pressure increasing mechanism and the wheel cylinder provided on the one side of the front right and left wheel side of the vehicle to each other, and to connect the wheel cylinder provided on the another side of the front right and left wheel side of the vehicle and the one of the plurality of systems of the master cylinder to each other.

14. A vehicle brake device according to any one of claims 10 to 13, further comprising hydraulic pressure detection means for detecting the hydraulic pressure output from the master cylinder,
wherein the control means controls drive of the linear control valve of the valve mechanism based on the hydraulic pressure detected by the hydraulic pressure detection means.

15. A vehicle brake device according to any one of claims 1 to 14, wherein the pressure increasing mechanism mechanically moves by the hydraulic pressure output from the master cylinder in response to the operation by the driver on the brake pedal.

16. A vehicle brake device according to any one of claims 1 to 3, wherein the hydraulic pressure generated by the pressure increasing mechanism is transmitted to the master cylinder as a servo pressure.
